# EUROPEAN PATENT SPECIFICATION

(11) **EP 3 933 229 B1**
(45) Date of publication and mention of the grant of the patent: **25.10.2023**
(21) Application number: 20823219.9
(22) Date of filing: 15.04.2020
(51) Int. Cl.: B60K 6/387, F16H 3/72, B60K 6/442, B60K 25/00, B60L 1/00, B60L 50/16, B60K 6/445, B60K 6/40, B60K 6/365, B60K 6/36, F16H 57/04, B60K 11/02, B60K 1/02, B60K 6/48, B60K 1/00

(54) **VEHICLE DRIVE DEVICE**
FAHRZEUGANTRIEBSVORRICHTUNG
DISPOSITIF D'ENTRAÎNEMENT DE VÉHICULE

(30) Priority: 14.06.2019 JP 2019111169; 05.12.2019 JP 2019220602
(43) Date of publication of application: 05.01.2022
(73) Proprietor: AISIN CORPORATION, Aichi 448-8650 (JP)
(72) Inventor: YAMADA Michihiko, Kariya-shi, Aichi 448-8650 (JP); SADA Natsuki, Kariya-shi, Aichi 448-8650 (JP); EGUCHI Keisuke, Kariya-shi, Aichi 448-8650 (JP)
(74) Representative: Kramer Barske Schmidtchen Patentanwälte PartG mbB
(86) International application number: PCT/JP2020/016548
(87) International publication number: WO 2020/250567

(56) References cited:
- JP-A- 2007 203 796
- JP-A- 2011 259 590
- JP-A- 2013 199 216
- JP-A- 2013 199 216
- JP-A- 2018 099 980
- JP-A- 2019 048 549
- JP-A- 2019 048 549
- US-A1- 2017 167 596
- US-A1- 2018 045 295

## Description

### TECHNICAL FIELD

The present invention relates to vehicle drive devices including: an input member that is drivingly coupled to an internal combustion engine; a pair of output members that is drivingly coupled to wheels; a first rotating electrical machine and a second rotating electrical machine; a first transmission system that drivingly couples the first rotating electrical machine and the input member; a second transmission system that drivingly couples the second rotating electrical machine and the pair of output members; and a first hydraulic pump and a second hydraulic pump.

### BACKGROUND ART

An example of such a vehicle drive device is disclosed in Patent Document 1 below. In the following description of the background art, reference signs in Patent Document 1 are shown in parentheses. US 2017/0167596 A1 and US 2018/0045295 A1 disclose further vehicle drive devices.

A vehicle drive device of Patent Document 1 includes a first hydraulic pump (101) that is driven by a driving force of an internal combustion engine (1) transmitted to an input member (6), and a second hydraulic pump (102) that is driven by a dedicated driving force source (111), the dedicated driving force source (111) being independent of a first transmission system (5) and a second transmission system (11, 8, 9). The first hydraulic pump (101) is configured to supply oil to the first rotating electrical machine (2), the second rotating electrical machine (3), and the first transmission system (5) through oil passages (210, 220, 230). The second hydraulic pump (102) is configured to supply oil to the second rotating electrical machine (3) through an oil passage (240).

### Related Art Documents

### Patent Documents

Patent Document 1: Japanese Unexamined Patent Application Publication No. 2017-61226 (JP 2017-61226 A) (FIG. 3)

### SUMMARY OF THE INVENTION

### Problem to be Solved by the Invention

In the vehicle drive device of Patent Document 1, neither the first hydraulic pump (101) nor the second hydraulic pump (102) supply oil to the second transmission system (11, 8, 9), and oil is supplied to the second transmission system (11, 8, 9) by rotation of an input gear (9a) of a differential gear mechanism (9) included in the second transmission system (11, 8, 9). Specifically, oil stored in a case (30) is scooped up by rotation of the input gear (9a) of the differential gear mechanism (9), and this oil flows through oil passages provided in various portions in the case (30) due to the action of gravity and is supplied to each part of the second transmission system (11, 8, 9). In such a configuration in which oil is supplied using gear rotation, oil supply paths and the flow rate of oil in each path tend to be affected by the mounting angle of the vehicle drive device on the vehicle, the sizes of the components of the second transmission system (11, 8, 9), etc. It is therefore difficult to use the same vehicle drive device to a plurality of vehicle models, and the vehicle drive device lacks robustness because of, e.g., the need to redesign the oil passages for each vehicle model.

A first possible method to solve the above problem is to configure the first hydraulic pump (101) to supply oil to the second transmission system (11, 8, 9) in addition to the first rotating electrical machine (2), the second rotating electrical machine (3), and the first transmission system (5). A second possible method is to configure the second hydraulic pump (102) to supply oil to the second transmission system (11, 8, 9) in addition to the second rotating electrical machine (3).

In the first method, however, when the internal combustion engine (1) is stopped and the vehicle is traveling by the driving force of the second rotating electrical machine (3), the first hydraulic pump (101) is not driven and therefore oil cannot be supplied to the second transmission system (11, 8, 9). In the second method, on the other hand, oil can be supplied to the second transmission system (11, 8, 9) regardless of the state of the internal combustion engine (1). However, when the internal combustion engine (1) is stopped and the vehicle is traveling by the driving force of the second rotating electrical machine (3), the first hydraulic pump (101) is not driven and therefore oil cannot be supplied to the first transmission system (5). Accordingly, in the second method, the discharge amount of the second hydraulic pump (102) needs to be large enough so that the second hydraulic pump (102) can supply oil to the first transmission system (5) in addition the second rotating electrical machine (3) and the second transmission system (11, 8, 9). This results in increased manufacturing cost of the vehicle drive device.

It is therefore desired to implement a vehicle drive device with high robustness and low manufacturing cost.

### Means for Solving the Problem

In view of the above, the vehicle drive device includes the features specified in claim 1.

According to the invention, oil is supplied to the second transmission system by the first hydraulic pump that is driven by the driving force transmitted through the second transmission system that drivingly couples the second rotating electrical machine and the output member. Accordingly, oil can be appropriately supplied to the portion to which the driving force is transmitted when the vehicle is traveling by the driving force of the second rotating electrical machine. Oil is also supplied to the first transmission system, the first rotating electrical machine, and the second rotating electrical machine by the second hydraulic pump that is driven by the independent dedicated driving force source. Accordingly, when the vehicle is traveling by the driving force of the second rotating electrical machine, the second rotating electrical machine can be cooled by the oil discharged from the second hydraulic pump. When the first rotating electrical machine generates electric power by the driving force of the internal combustion engine while the vehicle is stopped, the first transmission system can be lubricated and the first rotating electrical machine can be cooled both by the oil discharged from the second hydraulic pump. That is, by controlling the discharge amount of the second hydraulic pump, an appropriate amount of oil can be supplied to the portions where oil is needed according to the operating state of each part, regardless of the traveling state of the vehicle.

As described above, according to this configuration, the oil discharged from the first hydraulic pump and the second hydraulic pump can be appropriately supplied to the portions of the vehicle drive device where oil is needed, without using gear rotation. Oil can thus be stably supplied to each part regardless of the mounting angle of the vehicle drive device on the vehicle, the sizes of the components of the second transmission system, etc. Therefore, according to this configuration, the vehicle drive device with high robustness can be implemented.

According to the invention, even while the internal combustion engine is stopped, oil is supplied to the second transmission system by the first hydraulic pump that is driven by the driving force transmitted through the second transmission system that drivingly couples the second rotating electrical machine and the output member, when the vehicle is traveling by the driving force of the second rotating electrical machine. That is, even while the internal combustion engine is stopped, the second transmission system can be lubricated by the oil discharged from the first hydraulic pump. The discharge amount of the second hydraulic pump therefore need not be large enough that the second hydraulic pump that is driven by the independent dedicated driving force source can supply oil to the second transmission system in addition the first rotating electrical machine, the second rotating electrical machine, and the first transmission system. As a result, manufacturing cost of the vehicle drive device can be reduced.

### BRIEF DESCRIPTION OF THE DRAWINGS

[FIG. 1] FIG. 1 is a skeleton diagram of a vehicle drive device according to a first embodiment.
[FIG. 2] FIG. 2 is a conceptual diagram illustrating a hydraulic circuit of the vehicle drive device according to the first embodiment.
[FIG. 3] FIG. 3 is a skeleton diagram of a vehicle drive device according to a second embodiment.
[FIG. 4] FIG. 4 is a skeleton diagram of a vehicle drive device according to a third embodiment.

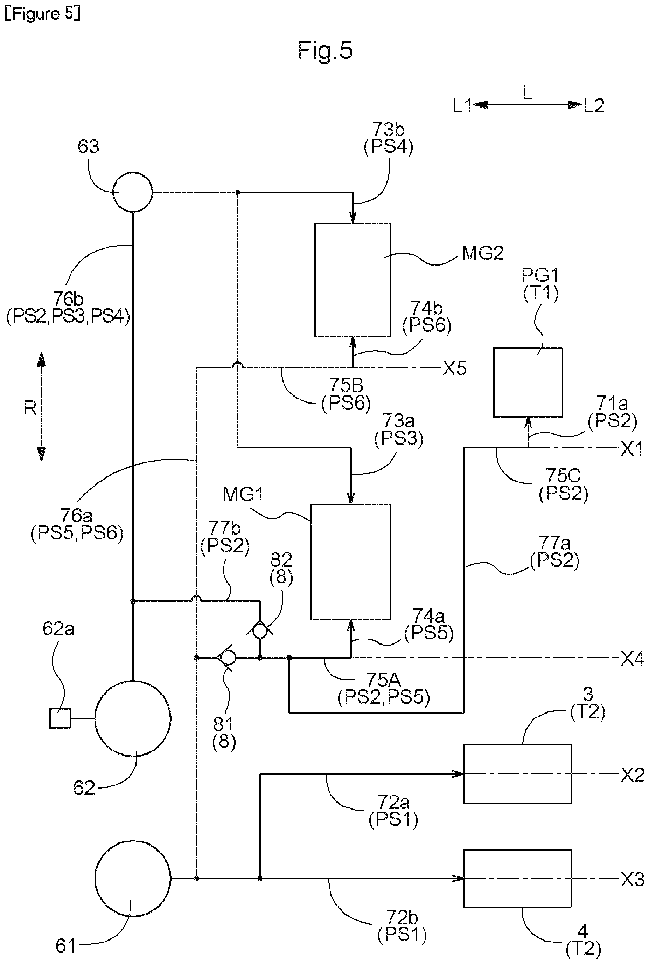

[FIG. 5] FIG. 5 is a conceptual diagram illustrating a hydraulic circuit of the vehicle drive device according to the third embodiment.

### MODES FOR CARRYING OUT THE INVENTION

### 1. First Embodiment

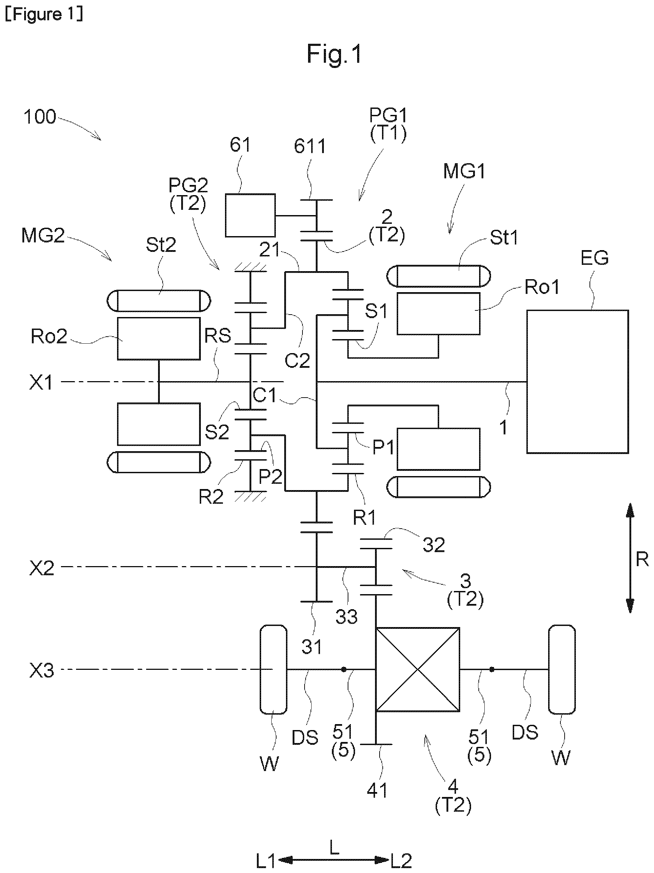

Hereinafter, a vehicle drive device 100 according to a first embodiment will be described with reference to the drawings. As shown in FIG. 1, the vehicle drive device 100 includes a first rotating electrical machine MG1 and a second rotating electrical machine MG2, a first transmission system T1 and a second transmission system T2, an input member 1, and an output member 5. In the present embodiment, these components are housed in a case (not shown).

The first transmission system T1 drivingly couples the first rotating electrical machine MG1 and the input member 1. The second transmission system T2 drivingly couples the second rotating electrical machine MG2 and the output member 5. In the present embodiment, the first transmission system T1 includes a first planetary gear mechanism PG1. Further, in the present embodiment, the second transmission system T2 includes a second planetary gear mechanism PG2, a counter drive gear 2, a counter gear mechanism 3, and a differential gear mechanism 4.

As used herein, "drivingly coupled" refers to the state where two rotation elements are coupled so that a driving force can be transmitted therebetween, and includes the state where the two rotation elements are coupled so as to rotate integrally or the state where the two rotation elements are coupled via one or two or more transmission members so that a driving force can be transmitted therebetween via the one or more transmission members. Such transmission members include various members that transmit rotation at the same speed or at a shifted speed, such as, e.g., a shaft, a gear mechanism, a belt, and a chain. The transmission members may include an engagement device that selectively transmits rotation and a driving force, such as, e.g., a friction engagement device and a meshing engagement device. In the case where "drivingly coupled" is used for each rotation element in the first planetary gear mechanism PG1 or the second planetary gear mechanism PG2 or in the differential gear mechanism 4, it refers to the state where three or more rotation elements are drivingly coupled to each other with no other rotation elements interposed therebetween.

In the present embodiment, the first rotating electrical machine MG1, the second rotating electrical machine MG2, the first planetary gear mechanism PG1, and the second planetary gear mechanism PG2 are arranged on a first axis X1 that is a rotation axis of the first rotating electrical machine MG1, the second rotating electrical machine MG2, the first planetary gear mechanism PG1, and the second planetary gear mechanism PG2. That is, in the present embodiment, the first rotating electrical machine MG1, the second rotating electrical machine MG2, the first planetary gear mechanism PG1, and the second planetary gear mechanism PG2 are coaxially arranged. The counter gear mechanism 3 is disposed on a second axis X2 that is a rotation axis of the counter gear mechanism 3. The differential gear mechanism 4 is disposed on a third axis X3 that is a rotation axis of the differential gear mechanism 4. The first axis X1, the second axis X2, and the third axis X3 are imaginary axes that are different from each other, and are located parallel to each other.

In the following description, a direction parallel to the axes X1 to X3 is referred to as the "axial direction L" of the vehicle drive device 100. The side in the axial direction L on which the second rotating electrical machine MG2 is disposed with respect to the first planetary gear mechanism PG1 is referred to as the "first side L1 in the axial direction," and the opposite side in the axial direction L is referred to as the "second side L2 in the axial direction." A direction perpendicular to each of the axes X1 to X3 is referred to as the "radial direction R" for each axis. When it is not necessary to identify the axis used for the radial direction, or when it is clear which axis is used for the radial direction, the direction is sometimes simply referred to as the "radial direction R."

The input member 1 is provided so as to extend in the axial direction L. In the present embodiment, the input member 1 is disposed on the first side L1 in the axial direction with respect to an internal combustion engine EG. The input member 1 is drivingly coupled to the internal combustion engine EG. It is preferable that the input member 1 be drivingly coupled to an output shaft (crankshaft, etc.) of the internal combustion engine EG via a damper device (not shown) that attenuates fluctuations in torque to be transmitted. The internal combustion engine EG is a motor (gasoline engine, diesel engine, etc.) that is driven by fuel combustion to output power.

The first rotating electrical machine MG1 has a function as a motor (electric motor) that is supplied with electric power to generate power, and a function as a generator (electric generator) that is supplied with power to generate electric power. The first rotating electrical machine MG1 is therefore electrically connected to an electric energy storage device (not shown). Various known electric energy storage devices such as a battery and a capacitor can be used as the electric energy storage device. In the present embodiment, the first rotating electrical machine MG1 functions as a generator that generates electric power by the torque of the input member 1 (internal combustion engine EG) to charge the electric energy storage device or supply the electric power for driving the second rotating electrical machine MG2. However, the first rotating electrical machine MG1 may function as a motor that performs power running to generate a driving force (synonymous with "torque"), for example, when a vehicle is traveling at high speeds or when the internal combustion engine EG is started.

The first rotating electrical machine MG1 includes a first stator St1 fixed to a non-rotation member (e.g., the case described above) and a first rotor Ro1 supported so as to be rotatable relative to the first stator St1. In the present embodiment, the first rotor Ro1 is disposed inside the first stator St1 in the radial direction R.

The first planetary gear mechanism PG1 corresponds to a "distribution differential gear mechanism" that distributes the driving force of the internal combustion engine EG transmitted to the input member 1 to the first rotating electrical machine MG1 and the second transmission system T2. As described above, the vehicle drive device 100 according to the present embodiment is configured as what is called a power split hybrid vehicle drive device. In the present embodiment, the first planetary gear mechanism PG1 is a single-pinion type planetary gear mechanism. Specifically, the first planetary gear mechanism PG1 includes a first carrier C1 supporting a first pinion gear P1, a first sun gear S1 meshing with the first pinion gear P1, and a first ring gear R1 disposed around the first sun gear S1 in the radial direction R and meshing with the first pinion gear P1.

In the present embodiment, the first carrier C1 is an input element of the first planetary gear mechanism PG1 and is coupled to the input member 1 so as to rotate integrally with the input member 1. That is, in the present embodiment, the first carrier C1 corresponds to the "first rotation element" drivingly coupled to the input member 1. The first pinion gear P1 is rotatably supported by the first carrier C1. The first pinion gear P1 rotates (rotates) about its axis and rotates (revolves) around the first sun gear S1. A plurality of the first pinion gears P1 is provided along the revolution path of the first pinion gear P1.

In the present embodiment, the first sun gear S1 is one of the rotation elements after distribution of the driving force in the first planetary gear mechanism PG1 that is the distribution differential gear mechanism, and is coupled to the first rotor Ro1 of the first rotating electrical machine MG1 so as to rotate integrally with the first rotor Ro1. That is, in the present embodiment, the first sun gear S1 corresponds to the "second rotation element" drivingly coupled to the first rotating electrical machine MG1.

In the present embodiment, the first ring gear R1 is the other rotation element after distribution of the driving force in the first planetary gear mechanism PG1 that is the distribution differential gear mechanism. In the present embodiment, the first ring gear R1 corresponds to the "third rotation element" of the distribution differential gear mechanism (first planetary gear mechanism PG1). In the present embodiment, the first ring gear R1 is coupled to a cylindrical gear forming member 21 so as to rotate integrally with the gear forming member 21. In this example, the first ring gear R1 is formed on the inner peripheral surface of the gear forming member 21.

In the present embodiment, the counter drive gear 2 is coupled to the first ring gear R1 of the first planetary gear mechanism PG1 via the gear forming member 21 so as to rotate integrally with the first ring gear R1. That is, the counter drive gear 2 corresponds to the "first gear" coupled to the third rotation element (first ring gear R1) so as to rotate integrally with the third rotation element. In this example, the counter drive gear 2 is formed on the outer peripheral surface of the gear forming member 21.

The second rotating electrical machine MG2 has a function as a motor (electric motor) that is supplied with electric power to generate power, and a function as a generator (electric generator) that is supplied with power to generate electric power. Like the first rotating electrical machine MG1, the second rotating electrical machine MG2 is therefore also electrically connected to the electric energy storage device. In the present embodiment, the second rotating electrical machine MG2 mainly functions as a motor that generates a driving force for causing the vehicle to travel. However, the second rotating electrical machine MG2 may function as a generator that regenerates the inertial force of the vehicle as electric energy, for example, during deceleration of the vehicle.

The second rotating electrical machine MG2 includes a second stator St2 fixed to the non-rotation member (e.g., the case described above) and a second rotor Ro2 supported so as to be rotatable relative to the second stator St2. In the present embodiment, the second rotor Ro2 is disposed inside the second stator St2 in the radial direction R. A rotor shaft RS extending in the axial direction L is coupled to the second rotor Ro2 so as to rotate integrally with the second rotor Ro2. In the present embodiment, the rotor shaft RS is disposed inside the second rotor Ro2 in the radial direction R.

The second planetary gear mechanism PG2 corresponds to the " speed reducer" that reduces the speed of rotation of the second rotating electrical machine MG2 to transmit the resultant rotation to the first gear (counter drive gear 2). In the present embodiment, the second planetary gear mechanism PG2 is a single-pinion type planetary gear mechanism. Specifically, the second planetary gear mechanism PG2 includes a second carrier C2 supporting a second pinion gear P2, a second sun gear S2 meshing with the second pinion gear P2, and a second ring gear R2 disposed around the second sun gear S2 in the radial direction R and meshing with the second pinion gear P2.

In the present embodiment, the second sun gear S2 is an input element of the second planetary gear mechanism PG2 and is coupled to the rotor shaft RS of the second rotating electrical machine MG2 so as to rotate integrally with the rotor shaft RS. The second ring gear R2 is supported so as not to be rotatable relative to the non-rotation member (e.g., the case described above) in the circumferential direction. The second carrier C2 is an output element of the second planetary gear mechanism PG2 and is coupled to the gear forming member 21 so as to rotate integrally with the gear forming member 21. That is, in the present embodiment, the second carrier C2, the first ring gear R1, and the counter drive gear 2 rotate integrally. The second pinion gear P2 is rotatably supported by the second carrier C2. The second pinion gear P2 rotates (rotates) about its axis and rotates (revolves) around the second sun gear S2. A plurality of the second pinion gears P2 is provided along the revolution path of the second pinion gear P2.

The counter gear mechanism 3 is disposed in a power transmission path between the counter drive gear 2 and the differential gear mechanism 4. The counter gear mechanism 3 includes a first counter gear 31, a second counter gear 32, and a counter shaft 33.

The first counter gear 31 is an input element of the counter gear mechanism 3. The first counter gear 31 meshes with the counter drive gear 2. That is, the first counter gear 31 corresponds to the "second gear" meshing with the first gear (counter drive gear 2).

The second counter gear 32 is an output element of the counter gear mechanism 3. The second counter gear 32 is integrally coupled to the first counter gear 31 via the counter shaft 33 extending in the axial direction L. That is, the second counter gear 32 corresponds to the "third gear" that rotates integrally with the second gear (first counter gear 31). In the present embodiment, the second counter gear 32 is disposed on the second side L2 in the axial direction with respect to the first counter gear 31. In the present embodiment, the second counter gear 32 has a smaller diameter than the first counter gear 31.

The differential gear mechanism 4 includes a differential input gear 41. The differential input gear 41 is an input element of the differential gear mechanism 4. The differential input gear 41 meshes with the second counter gear 32 of the counter gear mechanism 3. That is, the differential input gear 41 corresponds to the "fourth gear" meshing with the third gear (second counter gear 32).

In the present embodiment, the differential gear mechanism 4 is a bevel gear type differential gear mechanism. Specifically, the differential gear mechanism 4 includes a hollow differential case, a pinion shaft supported so as to rotate integrally with the differential case, a pair of pinion gears supported so as to be rotatable relative to the pinion shaft, and a pair of side gears meshing with the pair of pinion gears and functioning as distribution output elements. The pinion shaft, the pair of pinion gears, and the pair of side gears are housed in the differential case. In the present embodiment, the differential input gear 41 is coupled to the differential case so as to protrude outward in the radial direction R from the differential case.

The output member 5 is drivingly coupled to wheels W. The output member 5 includes a pair of output units 51. Each of the pair of output units 51 is drivingly coupled to the wheel W via a drive shaft DS. In the present embodiment, each output unit 51 is coupled to a corresponding one of the pair of side gears of the differential gear mechanism 4 so as to rotate integrally with the corresponding side gear. For example, the output unit 51 can be a tubular member that is formed integrally with the corresponding side gear of the differential gear mechanism 4 and that is coupled to the drive shaft DS disposed inside the tubular member in the radial direction R such that the tubular member rotates integrally with the drive shaft DS. The differential gear mechanism 4 therefore corresponds to the "output differential gear mechanism" that distributes rotation of the fourth gear (differential input gear 41) to the pair of output units 51 that is the output member 5.

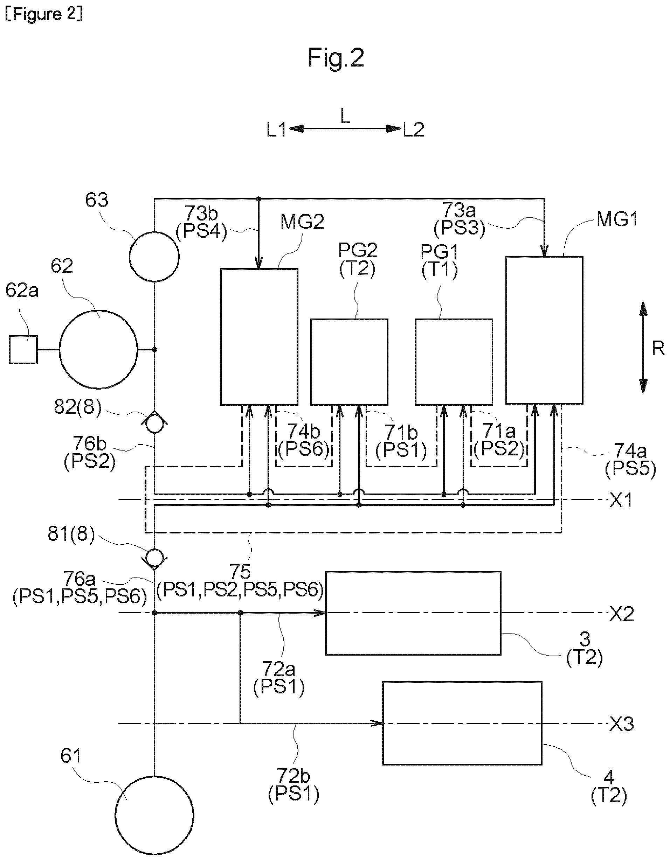

As shown in FIGS. 1 and 2, the vehicle drive device 100 further includes a first hydraulic pump 61 and a second hydraulic pump 62.

The first hydraulic pump 61 is a hydraulic pump that is driven by the driving force transmitted through the second transmission system T2. In the present embodiment, the first hydraulic pump 61 includes a pump drive gear 611 for driving the first hydraulic pump 61. The pump drive gear 611 meshes with the counter drive gear 2 at a different position from the first counter gear 31 in the circumferential direction of the counter drive gear 2. As described above, in the present embodiment, the pump drive gear 611 meshing with the counter drive gear 2 of the second transmission system T2 rotates with rotation of the counter drive gear 2. The first hydraulic pump 61 is thus driven by the rotation of the pump drive gear 611.

The second hydraulic pump 62 is a hydraulic pump that is driven by a dedicated driving force source, the dedicated driving force source being independent of the first transmission system T1 and the second transmission system T2. As shown in FIG. 2, in the present embodiment, the second hydraulic pump 62 is an electrically operated hydraulic pump that is driven by an electric motor 62a. For example, the electric motor 62a can be an alternating current (AC) rotating electrical machine that is driven by a plurality of phases of AC power. In this case, although not shown in the figures, the electric motor 62a is connected to a direct current (DC) power supply via an inverter that converts electric power between DC power and AC power. Driving of the electric motor 62a is controlled via the inverter.

As shown in FIG. 2, the vehicle drive device 100 has a first oil passage PS1 that supplies oil discharged from the first hydraulic pump 61 to the second transmission system T2, a second oil passage PS2 that supplies oil discharged from the second hydraulic pump 62 to the first transmission system T1, a third oil passage PS3 that supplies the oil discharged from the second hydraulic pump 62 to the first rotating electrical machine MG1, and a fourth oil passage PS4 that supplies the oil discharged from the second hydraulic pump 62 to the second rotating electrical machine MG2. In the present embodiment, the vehicle drive device 100 further has a fifth oil passage PS5 that supplies the oil discharged from the first hydraulic pump 61 to the first rotating electrical machine MG1, and a sixth oil passage PS6 that supplies the oil discharged from the first hydraulic pump 61 to the second rotating electrical machine MG2.

In the present embodiment, the first oil passage PS1 includes a second supply passage 71b that supplies oil to the second planetary gear mechanism PG2, a first lubrication oil passage 72a that supplies oil to the counter gear mechanism 3, and a second lubrication oil passage 72b that supplies oil to the differential gear mechanism 4.

In the present embodiment, the second supply passage 71b is disposed inward of the first rotating electrical machine MG1, the second rotating electrical machine MG2, the first planetary gear mechanism PG1, and the second planetary gear mechanism PG2 in the radial direction R. The second supply passage 71b is configured to supply oil to the second planetary gear mechanism PG2 from the inner side in the radial direction R. The oil that has reached the second planetary gear mechanism PG2 through the second supply passage 71b is supplied to the meshing portions between the second pinion gears P2 and the second sun gear S2 and between the second pinion gears P2 and the second ring gear R2, bearings that rotatably support these gears and the second carrier C2, etc. Although not shown in the figures, in the present embodiment, a plurality of the second supply passages 71b is arranged in the circumferential direction about the first axis X1.

In the present embodiment, the first lubrication oil passage 72a is disposed on the second axis X2. The oil that has reached the counter gear mechanism 3 through the first lubrication oil passage 72a is supplied to the meshing portion between the first counter gear 31 and the counter drive gear 2, the meshing portion between the second counter gear 32 and the differential input gear 41, bearings that rotatably support the counter shaft 33, etc.

In the present embodiment, the second lubrication oil passage 72b is disposed on the third axis X3. The second lubrication oil passage 72b communicates with the first lubrication oil passage 72a. That is, in the present embodiment, the second lubrication oil passage 72b branches from the first lubrication oil passage 72a and extends along the third axis X3 toward the differential gear mechanism 4. The oil that has reached the differential gear mechanism 4 through the second lubrication oil passage 72b is supplied to bearings that rotatably support the differential case, the meshing portions between the pinion gears and the side gears, etc.

In the present embodiment, the second oil passage PS2 includes a first supply passage 71a that supplies oil to the first planetary gear mechanism PG1.

In the present embodiment, the first supply passage 71a is disposed inward of the first rotating electrical machine MG1, the second rotating electrical machine MG2, the first planetary gear mechanism PG1, and the second planetary gear mechanism PG2 in the radial direction R. The first supply passage 71a is configured to supply oil to the first planetary gear mechanism PG1 from the inner side in the radial direction R. The oil that has reached the first planetary gear mechanism PG1 through the first supply passage 71a is supplied to the meshing portions between the first pinion gears P1 and the first sun gear S1 and between the first pinion gears P1 and the first ring gear R1, bearings that rotatably support these gears and the first carrier C1, etc. Although not shown in the figures, in the present embodiment, a plurality of the first supply passages 71a is arranged in the circumferential direction about the first axis X1.

In the present embodiment, the third oil passage PS3 includes a first outer oil passage 73a that supplies oil to the first rotating electrical machine MG1 from the outer side in the radial direction R.

In the present embodiment, the first outer oil passage 73a is disposed outward of the first rotating electrical machine MG1, the second rotating electrical machine MG2, the first planetary gear mechanism PG1, and the second planetary gear mechanism PG2 in the radial direction R. The oil that has reached the first rotating electrical machine MG1 through the first outer oil passage 73a is supplied to coil end portions of a stator coil of the first stator St1, etc.

In the present embodiment, the fourth oil passage PS4 includes a second outer oil passage 73b that supplies oil to the second rotating electrical machine MG2 from the outer side in the radial direction R.

In the present embodiment, the second outer oil passage 73b is disposed outward of the first rotating electrical machine MG1, the second rotating electrical machine MG2, the first planetary gear mechanism PG1, and the second planetary gear mechanism PG2 in the radial direction R. The oil that has reached the second rotating electrical machine MG2 through the second outer oil passage 73b is supplied to coil end portions of a stator coil of the second stator St2, etc.

The fifth oil passage PS5 includes a first inner oil passage 74a that supplies oil to the first rotating electrical machine MG1 from the inner side in the radial direction R.

In the present embodiment, the first inner oil passage 74a is disposed inward of the first rotating electrical machine MG1, the second rotating electrical machine MG2, the first planetary gear mechanism PG1, and the second planetary gear mechanism PG2 in the radial direction R. The oil that has reached the first rotating electrical machine MG1 through the first inner oil passage 74a is supplied to the first rotor Ro1, bearings that rotatably support the first rotor Ro1, etc. Although not shown in the figures, in the present embodiment, a plurality of the first inner oil passages 74a is arranged in the circumferential direction about the first axis X1.

The sixth oil passage PS6 includes a second inner oil passage 74b that supplies oil to the second rotating electrical machine MG2 from the inner side in the radial direction R.

In the present embodiment, the second inner oil passage 74b is disposed inward of the first rotating electrical machine MG1, the second rotating electrical machine MG2, the first planetary gear mechanism PG1, and the second planetary gear mechanism PG2 in the radial direction R. The oil that has reached the second rotating electrical machine MG2 through the second inner oil passage 74b is supplied to the second rotor Ro2, bearings that rotatably support the rotor shaft RS, etc. Although not shown in the figures, in the present embodiment, a plurality of the second inner oil passages 74b is arranged in the circumferential direction about the first axis X1.

In the present embodiment, an axis oil passage 75 is disposed inward of the first rotating electrical machine MG1, the second rotating electrical machine MG2, the first planetary gear mechanism PG1, and the second planetary gear mechanism PG2 in the radial direction R. The axis oil passage 75 is formed so as to communicate with the first inner oil passages 74a, the first supply passages 71a, and the second supply passages 71b. In the present embodiment, the axis oil passage 75 is also formed so as to communicate with the second inner oil passages 74b. The axis oil passage 75 therefore serves as a part of the first oil passage PS1, a part of the second oil passage PS2, a part of the fifth oil passage PS5, and a part of the sixth oil passage PS6. In the present embodiment, the axis oil passage 75 is formed so as to extend in the axial direction L on the first axis X1. The first inner oil passages 74a, the second inner oil passages 74b, the first supply passages 71a, and the second supply passages 71b are formed so as to extend outward in the radial direction R from the axis oil passage 75.

In the present embodiment, a first discharge oil passage 76a and a second discharge oil passage 76b are disposed so as to merge with the axis oil passage 75. In the present embodiment, the first discharge oil passage 76a and the second discharge oil passage 76b are disposed so as to communicate with an end on the first side L1 in the axial direction of the axis oil passage 75.

The first discharge oil passage 76a is an oil passage which is connected to the first hydraulic pump 61 and through which the oil discharged from the first hydraulic pump 61 flows. In the present embodiment, the first discharge oil passage 76a communicates with the second supply passages 71b, the first inner oil passages 74a, and the second inner oil passages 74b through the axis oil passage 75. The first discharge oil passage 76a therefore serves as a part of the first oil passage PS1, a part of the fifth oil passage PS5, and a part of the sixth oil passage PS6. In the present embodiment, the first lubrication oil passage 72a is formed so as to branch from the first discharge oil passage 76a.

The second discharge oil passage 76b is an oil passage which is connected to the second hydraulic pump 62 and through which the oil discharged from the second hydraulic pump 62 flows. In the present embodiment, the second discharge oil passage 76b communicates with the first supply passages 71a through the axis oil passage 75. The second discharge oil passage 76b therefore serves as a part of the second oil passage PS2.

In the present embodiment, the first outer oil passage 73a and the second outer oil passage 73b are also connected to the second hydraulic pump 62. The oil discharged from the second hydraulic pump 62 is cooled by an oil cooler 63 before being supplied to the first outer oil passage 73a and the second outer oil passage 73b. The oil cooler 63 includes, for example, a pipe through which oil flows, and is configured to cool the oil by heat exchange between a cooling medium (e.g., coolant, air, etc.) flowing outside the pipe and the oil inside the pipe. In this example, the first outer oil passage 73a and the second outer oil passage 73b are formed integrally from the connection portion with the second hydraulic pump 62 to the branch portion on the downstream side. The oil cooler 63 is disposed in this integral portion.

In the present embodiment, the vehicle drive device 100 further includes a valve mechanism 8. The valve mechanism 8 is configured to selectively supply either the oil discharged from the first hydraulic pump 61 or the oil discharged from the second hydraulic pump 62 to the first inner oil passages 74a and the first supply passages 71a. In the present embodiment, the valve mechanism 8 is configured to selectively supply either the oil discharged from the first hydraulic pump 61 or the oil discharged from the second hydraulic pump 62 to the axis oil passage 75. That is, in the present embodiment, the valve mechanism 8 selectively supplies either the oil discharged from the first hydraulic pump 61 or the oil discharged from the second hydraulic pump 62 to the first inner oil passages 74a, the second inner oil passages 74b, the first supply passages 71a, and the second supply passages 71b.

In the present embodiment, the valve mechanism 8 includes a first valve 81 and a second valve 82. In the present embodiment, the first valve 81 is disposed in the first discharge oil passage 76a at a position downstream of the connection portion of the first discharge oil passage 76a with the first lubrication oil passage 72a. The second valve 82 is disposed in the second discharge oil passage 76b. In the present embodiment, the first valve 81 is a check valve that allows the flow of oil from the first hydraulic pump 61 side to the axis oil passage 75 side but restricts the flow of oil in the opposite direction. The second valve 82 is a check valve that allows the flow of oil from the second hydraulic pump 62 side to the axis oil passage 75 side but restricts the flow of oil in the opposite direction. Therefore, when the oil pressure in the first discharge oil passage 76a is higher than that in the second discharge oil passage 76b, only the oil discharged from the first hydraulic pump 61 is supplied to the axis oil passage 75. In contrast, when the oil pressure in the first discharge oil passage 76a is lower than that in the second discharge oil passage 76b, only the oil discharged from the second hydraulic pump 62 is supplied to the axis oil passage 75.

In the vehicle drive device 100 configured as described above, even in the case where the wheels W are stopped or in the case where the rotational speed of the wheels W is low and the discharge pressure of the first hydraulic pump 61 is therefore low, oil can be supplied to the first rotating electrical machine MG1 and the second rotating electrical machine MG2 by the second hydraulic pump 62. For example, in the case where the driving force of the internal combustion engine EG is used to generate electric power by the first rotating electrical machine MG1 while the wheels W are stopped, oil can be supplied to the first transmission system T1 (first planetary gear mechanism PG1) through the second oil passage PS2 (second discharge oil passage 76b, axis oil passage 75, and first supply passages 71a) and oil can be supplied to the first rotating electrical machine MG1 through the third oil passage PS3 (first outer oil passage 73a), both by the second hydraulic pump 62. Moreover, in the present embodiment, oil can also be supplied to the first rotating electrical machine MG1 through the first inner oil passages 74a by the second hydraulic pump 62. For example, in the case where the vehicle equipped with the vehicle drive device 100 is started after stalling by the driving force of the second rotating electrical machine MG2, oil can be supplied to the second rotating electrical machine MG2 through the fourth oil passage PS4 (second outer oil passage 73b) by the second hydraulic pump 62. Furthermore, in the present embodiment, oil can also be supplied to the second rotating electrical machine MG2 through the second inner oil passages 74b by the second hydraulic pump 62.

In the case where the vehicle equipped with the vehicle drive device 100 is traveling by the driving force of the second rotating electrical machine MG2, the first hydraulic pump 61 is driven by the driving force transmitted through the second transmission system T2. Oil is thus supplied from the first hydraulic pump 61 to the second transmission system T2 through the first oil passage PS1 (first discharge oil passage 76a, axis oil passage 75, second supply passages 71b, first lubrication oil passage 72a, and second lubrication oil passage 72b). It is therefore not necessary to supply oil to the second transmission system T2 by the second hydraulic pump 62, and the second hydraulic pump 62 need only be able to supply oil to the second rotating electrical machine MG2 through the fourth oil passage PS4 (second outer oil passage 73b). Accordingly, the second hydraulic pump 62 can be reduced in size, and reduction in size of the vehicle drive device 100 can be achieved.

In the vehicle drive device 100, the first hydraulic pump 61 is driven by the driving force transmitted through the second transmission system T2 that drivingly couples the second rotating electrical machine MG2 and the output member 5. Therefore, the rotational speed of the first hydraulic pump 61 depends on the rotational speed of the wheels W. On the other hand, in a configuration in which the first hydraulic pump 61 is driven by the driving force of the internal combustion engine EG transmitted to the input member 1, the rotational speed of the first hydraulic pump 61 depends on the rotational speed of the internal combustion engine EG. Regarding the rotational speed of the internal combustion engine EG, an appropriate rotational speed range has been set for each type of internal combustion engine EG. Accordingly, in the configuration in which the first hydraulic pump 61 is driven by the driving force of the internal combustion engine EG transmitted to the input member 1, it is necessary to change the specifications of the first hydraulic pump 61 for each type of internal combustion engine EG so that the first hydraulic pump 61 is driven in the rotational speed range corresponding to the type of internal combustion engine EG. As described above, however, in the vehicle drive device 100, since the rotational speed of the first hydraulic pump 61 depends on the rotational speed of the wheels W, there is no need to change the specifications of the first hydraulic pump 61 for each type of internal combustion engine EG.

### 2. Second Embodiment

Hereinafter, the vehicle drive device 100 according to a second embodiment will be described with reference to the drawings. The vehicle drive device 100 according to the present embodiment is different from the vehicle drive device 100 according to the first embodiment in that the vehicle drive device 100 according to the first embodiment is a power split hybrid vehicle drive device, whereas the vehicle drive device 100 according to the present embodiment is configured as what is called a series-parallel hybrid vehicle drive device. Accordingly, in the present embodiment, the first planetary gear mechanism PG1 is a speed increaser. The vehicle drive device 100 includes an engagement device CL that connects and disconnects the first transmission system T1 and the second transmission system T2 to and from each other. The present embodiment will be described below, focusing on the differences from the first embodiment. The present embodiment is similar to the first embodiment in regard to the points that are not particularly described.

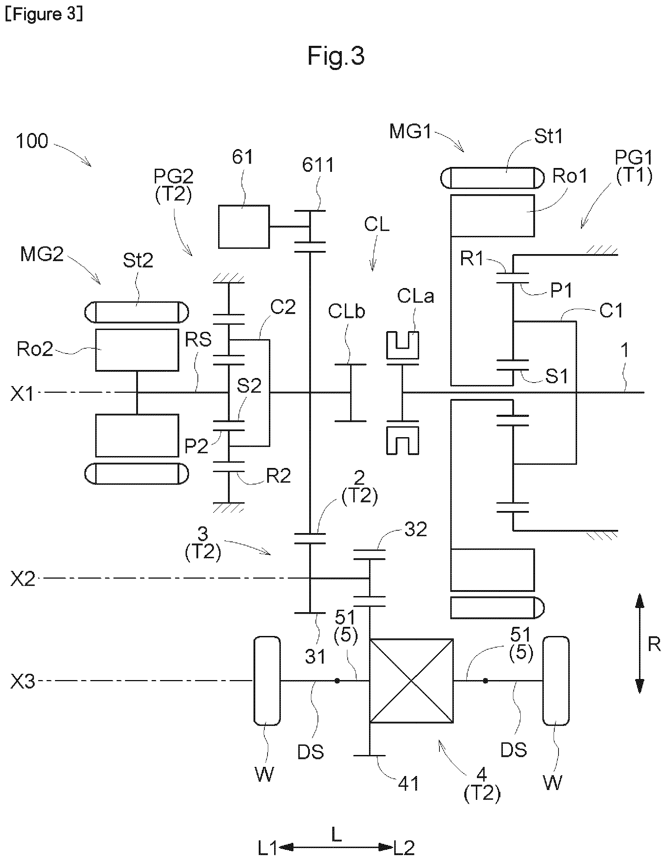

As shown in FIG. 3, in the present embodiment, the vehicle drive device 100 includes the engagement device CL that connects and disconnects the first transmission system T1 and the second transmission system T2 to and from each other. In the present embodiment, the engagement device CL is disposed on the first axis X1. In the present embodiment, the engagement device CL is a meshing engagement device (dog clutch) and is configured to switch between an engaged state and a disengaged state by an actuator such as a solenoid.

Specifically, the engagement device CL has a first claw portion CLa configured to move in the axial direction L by the actuator and a second claw portion CLb to which the first claw portion CLa is engaged. The first claw portion CLa rotates integrally with the input member 1 and is supported by the input member 1 so as to be movable in the axial direction L. The second claw portion CLb is provided so as to rotate integrally with the counter drive gear 2. In the present embodiment, the first claw portion CLa is disposed at an end on the first side L1 in the axial direction of the input member 1. The second claw portion CLb is formed so as to protrude from the counter drive gear 2 to the second side L2 in the axial direction.

The engagement device CL is engaged when the first claw portion CLa is engaged with the second claw portion CLb, and is disengaged when the first claw portion CLa is separated from the second claw portion CLb. When the engagement device CL is in the engaged state, power is transmitted between the first transmission system T1 and the second transmission system T2. That is, when the engagement device CL is in the engaged state, the vehicle is in a parallel hybrid mode in which, in addition to the driving force of the second rotating electrical machine MG2, the driving force of the internal combustion engine EG transmitted to the input member 1 and the driving force of the first rotating electrical machine MG1 are transmitted to the output member 5. In the present embodiment, since the engagement device CL is a meshing engagement device, the input member 1 and the counter drive gear 2 rotate integrally when the engagement device CL is in the engaged state. In contrast, when the engagement device CL is in the disengaged state, the power transmission between the first transmission system T1 and the second transmission system T2 is cut off. That is, when the engagement device CL is in the disengaged state, the vehicle is in a series hybrid mode in which the driving force of the second rotating electrical machine MG2 is transmitted to the output member 5 and the driving force of the internal combustion engine EG transmitted to the input member 1 is transmitted to the first rotating electrical machine MG1. In this mode, the second rotating electrical machine MG2 is driven by the electric power obtained by power generation of the first rotating electrical machine MG1.

In the present embodiment, the first planetary gear mechanism PG1 is a speed increaser. In the present embodiment, the first carrier C1 is an input element of the first planetary gear mechanism PG1 and is coupled to the input member 1 so as to rotate integrally with the input member 1. The first ring gear R1 is supported so as not to be rotatable relative to the non-rotation member (e.g., the case described above) in the circumferential direction. The first sun gear S1 is an output element of the first planetary gear mechanism PG1 and is coupled to the first rotor Ro1 of the first rotating electrical machine MG1 so as to rotate integrally with the first rotor Ro1. Rotation of the input member 1 is therefore increased in speed and transmitted to the first rotor Ro1 of the first rotating electrical machine MG1.

In the present embodiment as well, the second planetary gear mechanism PG2 is the "speed reducer" that reduces the speed of rotation of the second rotating electrical machine MG2 to transmit the resultant rotation to the first gear (counter drive gear 2).

A hydraulic circuit similar to that of the vehicle drive device 100 according to the first embodiment is formed in the vehicle drive device 100 according to the second embodiment.

### 3. Third Embodiment

Hereinafter, a vehicle drive device 100 according to a third embodiment will be described with reference to the drawings. Like the vehicle drive device 100 according to the first embodiment, the vehicle drive device 100 according to the present embodiment is configured as a power split hybrid vehicle drive device. However, the vehicle drive device 100 according to the present embodiment is different from the vehicle drive device 100 according to the first embodiment in that the vehicle drive device 100 according to the present embodiment does not include the second planetary gear mechanism PG2 that is a speed reducer. The vehicle drive device 100 according to the present embodiment is also different from the vehicle drive device 100 according to the first embodiment in that the first rotating electrical machine MG1, the second rotating electrical machine MG2, and the first planetary gear mechanism PG1 are not coaxially arranged. Moreover, the element with which the pump drive gear 611 of the first hydraulic pump 61 meshes is different between the present embodiment and the first embodiment. The present embodiment will be described below, focusing on the differences from the first embodiment. The present embodiment is similar to the first embodiment in regard to the points that are not particularly described.

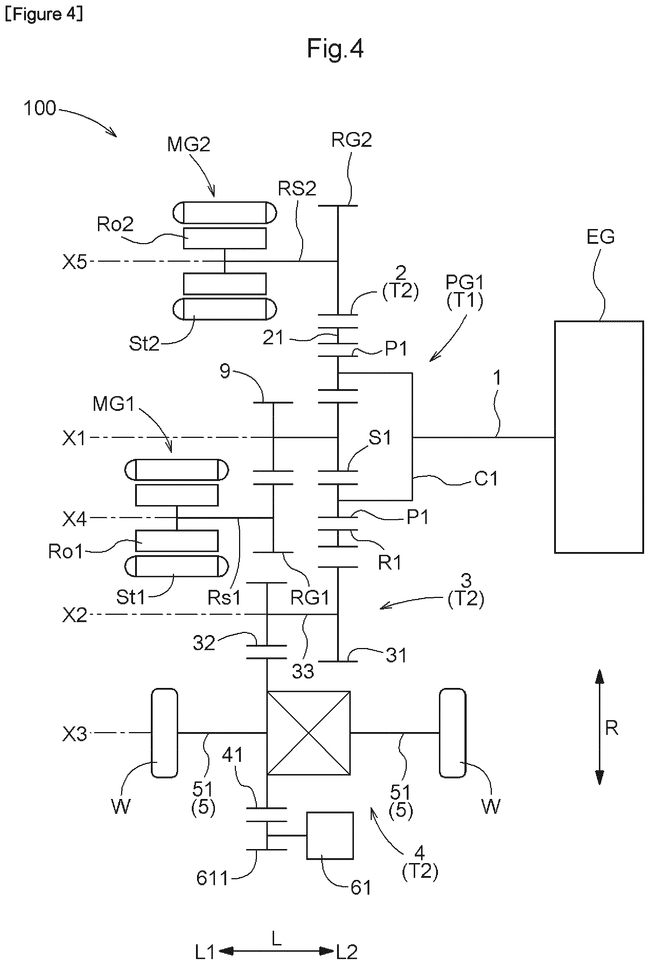

As shown in FIG. 4, in the present embodiment, the first planetary gear mechanism PG1 is disposed on the first axis X1 that is a rotation axis of the first planetary gear mechanism PG1. The counter gear mechanism 3 is disposed on a second axis X2 that is a rotation axis of the counter gear mechanism 3. The differential gear mechanism 4 is disposed on a third axis X3 that is a rotation axis of the differential gear mechanism 4. The first rotating electrical machine MG1 is disposed on a fourth axis X4 that is a rotation axis of the first rotor Ro1. The second rotating electrical machine MG2 is disposed on a fifth axis X5 that is a rotation axis of the second rotor Ro2. That is, in the present embodiment, the first rotating electrical machine MG1, the second rotating electrical machine MG2, the first planetary gear mechanism PG1, the counter gear mechanism 3, and the differential gear mechanism 4 are disposed on the different axes from each other. These axes X1 to X5 are imaginary axes that are different from each other, and are located parallel to each other.

In the present embodiment, the first transmission system T1 includes a distribution output gear 9 and a first rotor gear RG1 in addition to the first planetary gear mechanism PG1.

The distribution output gear 9 is coupled to the first sun gear S1 of the first planetary gear mechanism PG1 so as to rotate integrally with the first sun gear S1. That is, the distribution output gear 9 corresponds to the "sixth gear" that rotates integrally with the second rotation element of the first planetary gear mechanism PG1. In the present embodiment, the distribution output gear 9 is disposed on the first axis X1.

The first rotor gear RG1 is coupled to the first rotor Ro1 of the first rotating electrical machine MG1 so as to rotate integrally with the first rotor Ro1. The first rotor gear RG1 meshes with the distribution output gear 9. That is, the first rotor gear RG1 corresponds to the "seventh gear" that rotates integrally with the first rotor Ro1 of the first rotating electrical machine MG1 and that meshes with the sixth gear (distribution output gear 9). In the present embodiment, the first rotor gear RG1 is disposed on the fourth axis X4. In the present embodiment, the first rotor gear RG1 is coupled to the first rotor Ro1 via a first rotor shaft RS1 so as to rotate integrally with the first rotor Ro1. The first rotor shaft RS1 is provided so as to extend in the axial direction L. In the present embodiment, the first rotor shaft RS1 is disposed inside the first rotor Ro1 in the radial direction R.

In the present embodiment, the second transmission system T2 includes a second rotor gear RG2 in addition to the counter drive gear 2, the counter gear mechanism 3, and the differential gear mechanism 4. In the present embodiment, the second transmission system T2 does not include the second planetary gear mechanism PG2.

The second rotor gear RG2 is coupled to the second rotor Ro2 of the second rotating electrical machine MG2 so as to rotate integrally with the second rotor Ro2. The second rotor gear RG2 meshes with the counter drive gear 2. That is, the second rotor gear RG2 corresponds to the "fifth gear" that rotates integrally with the second rotor Ro2 of the second rotating electrical machine MG2 and that meshes with the first gear (counter drive gear 2). In the present embodiment, the second rotor gear RG2 meshes with the counter drive gear 2 at a different position from the first counter gear 31 in the circumferential direction of the counter drive gear 2. Moreover, in the present embodiment, the second rotor gear RG2 is disposed on the fifth axis X5. In the present embodiment, the second rotor gear RG2 is coupled to the first rotor Ro1 via a second rotor shaft RS2 so as to rotate integrally with the first rotor Ro1. The first rotor shaft RS1 is provided so as to extend in the axial direction L. In the present embodiment, the first rotor shaft RS1 is disposed inside the first rotor Ro1 in the radial direction R.

In the present embodiment, the pump drive gear 611 of the first hydraulic pump 61 meshes with the differential input gear 41 at a different position from the second counter gear 32 in the circumferential direction of the differential input gear 41. As described above, in the present embodiment, the pump drive gear 611 meshing with the differential input gear 41 included in the differential gear mechanism 4 of the second transmission system T2 rotates with rotation of the differential input gear 41. The first hydraulic pump 61 is thus driven by the rotation of the pump drive gear 611.

In the present embodiment, the second counter gear 32 of the counter gear mechanism 3 is disposed on the first side L1 in the axial direction with respect to the first counter gear 31.

A hydraulic circuit of the vehicle drive device 100 according to the present embodiment will be described below with reference to FIG. 4. As described above, in the present embodiment, the first rotating electrical machine MG1, the second rotating electrical machine MG2, and the first planetary gear mechanism PG1 are not coaxially arranged. Therefore, in the present embodiment, a first axis oil passage 75A, a second axis oil passage 75B, and a third axis oil passage 75C are provided for the first rotating electrical machine MG1, the second rotating electrical machine MG2, and the first planetary gear mechanism PG1, respectively, instead of the axis oil passage 75 disposed inward of the first rotating electrical machine MG1, the second rotating electrical machine MG2, and the first planetary gear mechanism PG1 in the radial direction R.

As shown in FIG. 4, the first axis oil passage 75A is disposed inward of the first rotating electrical machine MG1 in the radial direction R. The first axis oil passage 75A is formed so as to communicate with the first inner oil passages 74a. In the present embodiment, the first axis oil passage 75A is formed so as to extend in the axial direction L on the fourth axis X4.

The second axis oil passage 75B is disposed inward of the second rotating electrical machine MG2 in the radial direction R. The second axis oil passage 75B is formed so as to communicate with the second inner oil passages 74b. In the present embodiment, the second axis oil passage 75B is formed so as to extend in the axial direction L on the fifth axis X5.

The third axis oil passage 75C is disposed inward of the first planetary gear mechanism PG1 in the radial direction R. The third axis oil passage 75C is formed so as to communicate with the first supply passages 71a. In the present embodiment, the third axis oil passage 75C is formed so as to extend in the axial direction L on the first axis X1.

In the present embodiment, the first discharge oil passage 76a is formed so as to communicate with the first axis oil passage 75A and the second axis oil passage 75B. In the illustrated example, a downstream end of the first discharge oil passage 76a and an end on the first side L1 in the axial direction of the second axis oil passage 75B are connected together. An intermediate portion of the first discharge oil passage 76a and an end on the first side L1 in the axial direction of the first axis oil passage 75Aare connected together.

In the present embodiment, the second discharge oil passage 76b is formed so as to communicate with the first outer oil passage 73a and the second outer oil passage 73b. In the present embodiment, the oil cooler 63 is disposed in the second discharge oil passage 76b.

In the present embodiment, the first axis oil passage 75A and the third axis oil passage 75C are connected by a first connecting oil passage 77a. The first axis oil passage 75A and the second discharge oil passage 76b are connected by a second connecting oil passage 77b.

In the present embodiment, the valve mechanism 8 is configured to selectively supply either the oil discharged from the first hydraulic pump 61 or the oil discharged from the second hydraulic pump 62 to the first axis oil passage 75A and the third axis oil passage 75C.

In the present embodiment, the first valve 81 is disposed in the first axis oil passage 75A at a position upstream of the connection portion of the first axis oil passage 75A with the second connecting oil passage 77b. The second valve 82 is disposed in the second connecting oil passage 77b. Therefore, when the oil pressure in the first discharge oil passage 76a is higher than that in the second discharge oil passage 76b, only the oil discharged from the first hydraulic pump 61 is supplied to the first axis oil passage 75A. In contrast, when the oil pressure in the first discharge oil passage 76a is lower than that in the second discharge oil passage 76b, only the oil discharged from the second hydraulic pump 62 is supplied to the first axis oil passage 75A.

In the present embodiment, the first axis oil passage 75A is formed so that the oil discharged from the first hydraulic pump 61 is supplied to the first axis oil passage 75A through the first discharge oil passage 76a and that the oil discharged from the second hydraulic pump 62 is supplied to the first axis oil passage 75A through the second discharge oil passage 76b and the second connecting oil passage 77b. The first axis oil passage 75A is formed so as to communicate with the first inner oil passages 74a and to communicate with the first supply passages 71a through the first connecting oil passage 77a and the third axis oil passage 75C. The first axis oil passage 75A therefore serves as a part of the fifth oil passage PS5 and a part of the second oil passage PS2.

In the present embodiment, the second axis oil passage 75B is formed so as to communicate with the second inner oil passages 74b. The second axis oil passage 75B therefore serves as a part of the sixth oil passage PS6. The third axis oil passage 75C is formed so as to communicate with the first supply passages 71a. The third axis oil passage 75C therefore serves as a part of the second oil passage PS2.

In the present embodiment, the first discharge oil passage 76a is formed so as to communicate with the first inner oil passages 74a through the first axis oil passage 75A and to communicate with the second inner oil passages 74b through the second axis oil passage 75B. The first discharge oil passage 76a therefore serves as a part of the fifth oil passage PS5 and a part of the sixth oil passage PS6. The second discharge oil passage 76b is formed so as to communicate with the first outer oil passage 73a and the second outer oil passage 73b. The second discharge oil passage 76b therefore serves as a part of the third oil passage PS3 and a part of the fourth oil passage PS4.

In the present embodiment, the first connecting oil passage 77a is formed so as to communicate with the first supply passages 71a through the third axis oil passage 75C. The first connecting oil passage 77a therefore serves as a part of the second oil passage PS2. The second connecting oil passage 77b is formed so as to supply the oil discharged from the second hydraulic pump 62 to the first axis oil passage 75A and to communicate with the first supply passages 71a through the first axis oil passage 75A, the first connecting oil passage 77a, and the third axis oil passage 75C. The second connecting oil passage 77b therefore serves as a part of the second oil passage PS2.

### 4. Other Embodiments

(1) In the above embodiments, the configuration in which the vehicle drive device has the fifth oil passage PS5 and the sixth oil passage PS6 is described by way of example. However, the present invention is not limited to such a configuration. The vehicle drive device may have either the fifth oil passage PS5 or the sixth oil passage PS6 or may have both of them.
(2) In the above embodiments, the configuration in which the fifth oil passage PS5 includes the first inner oil passages 74a that supply oil to the first rotating electrical machine MG1 from the inner side in the radial direction R and the sixth oil passage PS6 includes the second inner oil passages 74b that supply oil to the second rotating electrical machine MG2 from the inner side in the radial direction R is described by way of example. However, the present invention is not limited to such a configuration. For example, the fifth oil passage PS5 may include an oil passage that supplies oil to the first rotating electrical machine MG1 from both sides in the axial direction L, instead of the first inner oil passages 74a. The sixth oil passage PS6 may include an oil passage that supplies oil to the second rotating electrical machine MG2 from both sides in the axial direction L, instead of the second inner oil passages 74b.
(3) In the above embodiments, the configuration in which the third oil passage PS3 includes the first outer oil passage 73a that supplies oil to the first rotating electrical machine MG1 from the outer side in the radial direction R and the fourth oil passage PS4 includes the second outer oil passage 73b that supplies oil to the second rotating electrical machine MG2 from the outer side in the radial direction R is described by way of example. However, the present invention is not limited to such a configuration. For example, the third oil passage PS3 may include an oil passage that supplies oil to the first rotating electrical machine MG1 from both sides in the axial direction L, instead of the first outer oil passage 73a. The fourth oil passage PS4 may include an oil passage that supplies oil to the second rotating electrical machine MG2 from both sides in the axial direction L, instead of the second outer oil passage 73b.
(4) In the above embodiments, the configuration in which the second oil passage PS2 includes the first supply passages 71a that supply oil to the first planetary gear mechanism PG1 is described by way of example. However, the present invention is not limited to such a configuration. The second oil passage PS2 may not include the first supply passages 71a. The first transmission system T1 may not include the first planetary gear mechanism PG1.
(5) In the above embodiments, the configuration in which the vehicle drive device includes the valve mechanism 8 that selectively supplies either the oil discharged from the first hydraulic pump 61 or the oil discharged from the second hydraulic pump 62 to the first inner oil passages 74a and the first supply passages 71a is described by way of example. However, the present invention is not limited to such a configuration. The vehicle drive device may not include the valve mechanism 8.
(6) In the above embodiments, the configuration in which the first valve 81 and the second valve 82 of the valve mechanism 8 are check valves is described by way of example. However, the present invention is not limited to such a configuration. For example, the valve mechanism 8 may include a solenoid valve whose opening and closing is controlled using an electromagnet.
(7) In the second embodiment, the configuration in which the engagement device CL is a meshing engagement device is described by way of example. However, the present invention is not limited to such a configuration. For example, the engagement device CL may be a hydraulic friction engagement device in which the state of engagement between friction members is hydraulically controlled.
(8) In the second embodiment, the vehicle drive device 100 configured as a series-parallel hybrid vehicle drive including the engagement device CL that connects and disconnects the first transmission system T1 and the second transmission system T2 to and from each other is described by way of example. However, the present invention is not limited to this. The vehicle drive device 100 having a configuration similar to that of the second embodiment may not include the engagement device CL. In this configuration, the vehicle drive device 100 is what is called a series hybrid vehicle drive device.
(9) The configuration disclosed in each of the above embodiments can be applied in combination with any of the configurations disclosed in the other embodiments as long as no inconsistency arises. Regarding other configurations as well, the embodiments disclosed herein are merely illustrative in all respects. Accordingly, various modifications can be made as appropriate without departing from the spirit and scope of the present invention, as described in the appended claims.

### 5. Outline of Embodiments

The outline of the vehicle drive device (100) described above will be described below. According to the invention as set in claim 1, oil is supplied to the second transmission system (T2) by the first hydraulic pump (61) that is driven by the driving force transmitted through the second transmission system (T2) that drivingly couples the second rotating electrical machine (MG2) and the output member (5). Accordingly, oil can be appropriately supplied to the portion to which the driving force is transmitted when the vehicle is traveling by the driving force of the second rotating electrical machine (MG2). Oil is also supplied to the first transmission system (T1), the first rotating electrical machine (MG1), and the second rotating electrical machine (MG2) by the second hydraulic pump (62) that is driven by the independent dedicated driving force source (62a). Accordingly, when the vehicle is traveling by the driving force of the second rotating electrical machine (MG2), the second rotating electrical machine (MG2) can be cooled by the oil discharged from the second hydraulic pump (62). When the first rotating electrical machine (MG1) generates electric power by the driving force of the internal combustion engine (EG) while the vehicle is stopped, the first transmission system (T1) can be lubricated and the first rotating electrical machine (MG1) can be cooled both by the oil discharged from the second hydraulic pump (62). That is, by controlling the discharge amount of the second hydraulic pump (62), an appropriate amount of oil can be supplied to the portions where oil is needed according to the operating state of each part, regardless of the traveling state of the vehicle.

As described above, according to this configuration, the oil discharged from the first hydraulic pump (61) and the second hydraulic pump (62) can be appropriately supplied to the portions of the vehicle drive device (100) where oil is needed, without using gear rotation. Oil can thus be stably supplied to each part regardless of the mounting angle of the vehicle drive device (100) on the vehicle, the sizes of the components of the second transmission system (T2), etc. Therefore, according to this configuration, the vehicle drive device (100) with high robustness can be implemented.

According to this configuration, even while the internal combustion engine (EG) is stopped, oil is supplied to the second transmission system (T2) by the first hydraulic pump (61) that is driven by the driving force transmitted through the second transmission system (T2) that drivingly couples the second rotating electrical machine (MG2) and the output member (5), when the vehicle is traveling by the driving force of the second rotating electrical machine (MG2). That is, even while the internal combustion engine (EG) is stopped, the second transmission system (T2) can be lubricated by the oil discharged from the first hydraulic pump (61). The discharge amount of the second hydraulic pump (62) therefore need not be large enough that the second hydraulic pump (62) that is driven by the independent dedicated driving force source (62a) can supply oil to the second transmission system (T2) in addition the first rotating electrical machine (MG1), the second rotating electrical machine (MG2), and the first transmission system (T1). As a result, manufacturing cost of the vehicle drive device (100) can be reduced.

According to this configuration, oil can be supplied from the first hydraulic pump (61) to the first rotating electrical machine (MG1) through the fifth oil passage (PS5) when the vehicle is traveling. Therefore, in addition to supplying oil from the second hydraulic pump (62) to the first rotating electrical machine (MG1) through the third oil passage (PS3), oil can also be supplied from the first hydraulic pump (61) to the first rotating electrical machine (MG1) through the fifth oil passage (PS5). Load on the second hydraulic pump (62) can thus be reduced. Accordingly, the second hydraulic pump (62) can be reduced in size, and therefore reduction in size of the vehicle drive device (100) can be achieved.

It is preferable that the third oil passage (PS3) include a first outer oil passage (73a) that supplies the oil to the first rotating electrical machine (MG1) from an outer side in a radial direction (R), and
that the fourth oil passage (PS4) include a second outer oil passage (73b) that supplies the oil to the second rotating electrical machine (MG2) from the outer side in the radial direction (R).

According to this configuration, as compared to a configuration in which oil is supplied to the first rotating electrical machine (MG1) and the second rotating electrical machine (MG2) from an inner side in the radial direction (R), it is not necessary to use a centrifugal force of a rotation member, etc. to supply oil. The first outer oil passage (73a) and the second outer oil passage (73b) can therefore have a simple configuration.

It is preferable that the fifth oil passage (PS5) include a first inner oil passage (74a) that supplies the oil to the first rotating electrical machine (MG1) from an inner side in the radial direction R.

According to this configuration, oil can be supplied more easily widely in the first rotating electrical machine (MG1) as compared to, e.g., a configuration in which oil is supplied to the first rotating electrical machine (MG1) from the outer side in the radial direction R.

It is preferable that the vehicle drive device further include a sixth oil passage (PS6) that supplies the oil discharged from the first hydraulic pump (61) to the second rotating electrical machine (MG2).

According to this configuration, oil can be supplied from the first hydraulic pump (61) to the second rotating electrical machine (MG2) through the sixth oil passage (PS6) when the vehicle is traveling. Accordingly, when the vehicle is traveling by the driving force of the second rotating electrical machine (MG2), not only oil can be supplied from the second hydraulic pump (62) to the second rotating electrical machine (MG2) through the fourth oil passage (PS4), but also oil can be supplied from the first hydraulic pump (61) to the second rotating electrical machine (MG2) through the sixth oil passage (PS6). Load on the second hydraulic pump (62) can thus be reduced. Accordingly, the second hydraulic pump (62) can be reduced in size, and therefore reduction in size of the vehicle drive device (100) can be achieved.

In the configuration in which the vehicle drive device includes the sixth oil passage (PS6),
it is preferable that the sixth oil passage (PS6) include a second inner oil passage (74b) that supplies the oil to the second rotating electrical machine (MG2) from an inner side in a radial direction (R).

According to this configuration, oil can be supplied more easily widely in the second rotating electrical machine (MG2) as compared to, e.g., a configuration in which oil is supplied to the second rotating electrical machine (MG2) from the outer side in the radial direction R.

It is preferable that the first transmission system (T1) include a distribution differential gear mechanism (PG1) that distributes a driving force of the internal combustion engine (EG) transmitted to the input member (1) to the first rotating electrical machine (MG1) and
the second transmission system (T2), and that the second oil passage (PS2) include a first supply passage (71a) that supplies the oil to the distribution differential gear mechanism (PG1).

According to this configuration, the second hydraulic pump (62) that is driven by the dedicated driving force source (62a) independent of the first transmission system (T1) and the second transmission system (T2) supplies oil to the distribution differential gear mechanism (PG1) through the first supply passage (71a). Oil can thus be appropriately supplied to the distribution differential gear mechanism (PG1) regardless of the traveling state of the vehicle.

In the configuration in which the fifth oil passage (PS5) includes the first inner oil passage (74a), it is preferable that
the first transmission system (T1) include a distribution differential gear mechanism (PG1) that distributes a driving force of the internal combustion engine (EG) transmitted to the input member (1) to the first rotating electrical machine (MG1) and the second transmission system (T2),
the second oil passage (PS2) include a first supply passage (71a) that supplies the oil to the distribution differential gear mechanism (PG1), and
the vehicle drive device further include a valve mechanism (8) that selectively supplies either the oil discharged from the first hydraulic pump (61) or the oil discharged from the second hydraulic pump (62) to the first inner oil passage (74a) and the first supply passage (71a).

According to this configuration, oil is supplied to the first inner oil passage (74a) and the first supply passage (71a) from either the first hydraulic pump (61) or the second hydraulic pump (62), whichever is appropriate. The amount of oil that is discharged from the other hydraulic pump can therefore be reduced. Energy consumption of the first hydraulic pump (61) and the second hydraulic pump (62) can thus be reduced, and energy efficiency of the vehicle drive device (100) can be increased.

In the configuration in which the vehicle drive device includes the valve mechanism (8), the first transmission system (T1) includes the distribution differential gear mechanism (PG1), and the second oil passage (PS2) includes the first supply passage (71a), it is preferable that
the distribution differential gear mechanism (PG1) include a first rotation element (C1) drivingly coupled to the input member (1), a second rotation element (S1) drivingly coupled to the first rotating electrical machine (MG1), and a third rotation element (R1),
the second transmission system (T2) include: a first gear (2) coupled to the third rotation element (R1) so as to rotate integrally with the third rotation element (R1); a speed reducer (PG2) that reduces a speed of rotation of the second rotating electrical machine (MG2) to transmit the resultant rotation to the first gear (2); a counter gear mechanism (3) having a second gear (31) meshing with the first gear (2), and a third gear (32) that rotates integrally with the second gear (31); and an output differential gear mechanism (4) that has a fourth gear (41) meshing with the third gear (32) and that distributes rotation of the fourth gear (41) to a pair of output units (51), the output units (51) being the output member (5),
the first oil passage (PS1) include a second supply passage (71b) that supplies the oil to the speed reducer (PG2),
the first rotating electrical machine (MG1), the second rotating electrical machine (MG2), the distribution differential gear mechanism (PG1), and the speed reducer (PG2) be coaxially arranged,
the first inner oil passage (74a), the first supply passage (71a), the second supply passage (71b), and an axis oil passage (75) be disposed inward of the first rotating electrical machine (MG1), the second rotating electrical machine (MG2), the distribution differential gear mechanism (PG1), and the speed reducer (PG2) in the radial direction (R), the axis oil passage (75) communicating with the first inner oil passage (74a), the first supply passage (71a), and the second supply passage (71b), and
the valve mechanism (8) selectively supply either the oil discharged from the first hydraulic pump (61) or the oil discharged from the second hydraulic pump (62) to the axis oil passage (75).

According to this configuration, the axis oil passage (75) is provided which communicates with the first inner oil passage (74a) of the fifth oil passage (PS5), the first supply passage (71a) of the second oil passage (PS2), and the second supply passage (71b) of the first oil passage (PS1). That is, the axis oil passage (75) is provided as a common part of the first oil passage (PS1), the second oil passage (PS2), and the fifth oil passage (PS5). The space for disposing the first oil passage (PS1), the second oil passage (PS2), and the fifth oil passage (PS5) can thus be reduced. This makes it easier to achieve reduction in size of the vehicle drive device (100).

According to this configuration, the valve mechanism (8) selectively supplies either the oil discharged from the first hydraulic pump (61) or the oil discharged from the second hydraulic pump (62) to the axis oil passage (75). Oil is thus supplied to the axis oil passage (75) from either the first hydraulic pump (61) or the second hydraulic pump (62), whichever is appropriate. The amount of oil that is discharged from the other hydraulic pump can therefore be reduced. Energy consumption of the first hydraulic pump (61) and the second hydraulic pump (62) can thus be reduced, and energy efficiency of the vehicle drive device (100) can be increased.

In the configuration in which the vehicle drive device includes the valve mechanism (8) and the sixth oil passage (PS6), the first transmission system (T1) includes the distribution differential gear mechanism (PG1), the second oil passage (PS2) includes the first supply passage (71a), and the sixth oil passage (PS6) includes the second inner oil passage (74b), it is preferable that
the distribution differential gear mechanism (PG1) include a first rotation element (C1) drivingly coupled to the input member (1), a second rotation element (S1) drivingly coupled to the first rotating electrical machine (MG1), and a third rotation element (R1),
the second transmission system (T2) include: a first gear (2) coupled to the third rotation element (R1) so as to rotate integrally with the third rotation element (R1); a counter gear mechanism (3) having a second gear (31) meshing with the first gear (2), and a third gear (32) that rotates integrally with the second gear (31); an output differential gear mechanism (4) that has a fourth gear (41) meshing with the third gear (32) and that distributes rotation of the fourth gear (41) to a pair of output units (51), the output units (51) being the output member (5); and a fifth gear (RG2) that rotates integrally with a rotor (Ro2) of the second rotating electrical machine (MG2) and that meshes with the first gear (2),
the first transmission system (T1) include a sixth gear (9) that rotates integrally with the second rotation element (S1), and a seventh gear (RG1) that rotates integrally with a rotor (Ro1) of the first rotating electrical machine (MG1) and that meshes with the sixth gear (9),
the first rotating electrical machine (MG1), the second rotating electrical machine (MG2), the distribution differential gear mechanism (PG1), the counter gear mechanism (3), and the output differential gear mechanism (4) be disposed on different axes from each other,
the first inner oil passage (74a) and a first axis oil passage (75A) communicating with the first inner oil passage (74a) be disposed inward of the first rotating electrical machine (MG1) in the radial direction (R),
the second inner oil passage (74b) and a second axis oil passage (75B) communicating with the second inner oil passage (74b) be disposed inward of the second rotating electrical machine (MG2) in the radial direction (R),
the first supply passage (71a) and a third axis oil passage (75C) communicating with the first supply passage (71a) be disposed inward of the distribution differential gear mechanism (PG1) in the radial direction (R), and
the valve mechanism (8) selectively supply either the oil discharged from the first hydraulic pump (61) or the oil discharged from the second hydraulic pump (62) to the first axis oil passage (75A) and the third axis oil passage (75C).

According to this configuration, the valve mechanism (8) selectively supplies either the oil discharged from the first hydraulic pump (61) or the oil discharged from the second hydraulic pump (62) to the first axis oil passage (75A) and the third axis oil passage (75C). Oil is thus supplied to the first axis oil passage (75A) and the third axis oil passage (75C) from either the first hydraulic pump (61) or the second hydraulic pump (62), whichever is appropriate. The amount of oil that is discharged from the other hydraulic pump can therefore be reduced. Energy consumption of the first hydraulic pump (61) and the second hydraulic pump (62) can thus be reduced, and energy efficiency of the vehicle drive device (100) can be increased.

According to this configuration, oil is not supplied to the second axis oil passage (75B) through the valve mechanism (8). The oil discharged from the second hydraulic pump (62) is therefore not supplied to the second axis oil passage (75B). Load on the second hydraulic pump (62) can thus be reduced. Accordingly, the second hydraulic pump (62) can be reduced in size, and therefore reduction in size of the vehicle drive device (100) can be achieved.

### INDUSTRIAL APPLICABILITY

The technique according to the present disclosure is applicable to vehicle drive devices including: an input member that is drivingly coupled to an internal combustion engine; a pair of output members that is drivingly coupled to wheels; a first rotating electrical machine and a second rotating electrical machine; a first transmission system that drivingly couples the first rotating electrical machine and the input member; a second transmission system that drivingly couples the second rotating electrical machine and the pair of output members; and a first hydraulic pump and a second hydraulic pump.

### Description of the Reference Numerals

100: vehicle drive device
1: input member
5: output member
61: first hydraulic pump
62: second hydraulic pump
62a: electric motor (dedicated driving force source)
EG: internal combustion engine
MG1: first rotating electrical machine
MG2: second rotating electrical machine
W: wheel
T1: first transmission system
T2: second transmission system
PS1: first oil passage
PS2: second oil passage
PS3: third oil passage
PS4: fourth oil passage

## Claims

1. A vehicle drive device (100), comprising:
an input member (1) that is drivingly coupled to an internal combustion engine (EG);
an output member (5) that is drivingly coupled to wheels (W);
a first rotating electrical machine (MG1) and a second rotating electrical machine (MG2);
a first transmission system (T1) that drivingly couples the first rotating electrical machine (MG1) and the input member (1);
a second transmission system (T2) that drivingly couples the second rotating electrical machine (MG2) and the output member (5);
a first hydraulic pump (61) that is driven by a driving force transmitted through the second transmission system (T2) such that even while the internal combustion engine (EG) is stopped, oil is supplied to the second transmission system (T2) by the first hydraulic pump (61) when the vehicle is travelling by the driving force of the second rotating electrical machine (MG2),
a second hydraulic pump (62) that is driven by a dedicated driving force source (62a), the dedicated driving force source (62a) being independent of the first transmission system (T1) and the second transmission system (T2);
a first oil passage (PS1) that supplies oil discharged from the first hydraulic pump (61) to the second transmission system (T2);
a second oil passage (PS2) that supplies oil discharged from the second hydraulic pump (62) to the first transmission system (T1);
a third oil passage (PS3) that supplies the oil discharged from the second hydraulic pump (62) to the first rotating electrical machine (MG1);
a fourth oil passage (PS4) that supplies the oil discharged from the second hydraulic pump (62) to the second rotating electrical machine (MG2); **characterized in that**
a fifth oil passage (PS5) supplies the oil discharged from the first hydraulic pump (61) to the first rotating electrical machine (MG1).

2. The vehicle drive device (100) according to claim 1, wherein
the third oil passage (PS3) includes a first outer oil passage (73a) that supplies the oil to the first rotating electrical machine (MG1) from an outer side in a radial direction (R), and
the fourth oil passage (PS4) includes a second outer oil passage (73b) that supplies the oil to the second rotating electrical machine (MG2) from the outer side in the radial direction (R).

3. The vehicle drive device (100) according to claim 1 or 2, wherein the fifth oil passage (PS5) includes a first inner oil passage (74a) that supplies the oil to the first rotating electrical machine (MG1) from an inner side in the radial direction (R).

4. The vehicle drive device (100) according to any one of claims 1 to 3, further comprising a sixth oil passage (PS6) that supplies the oil discharged from the first hydraulic pump (61) to the second rotating electrical machine (MG2).

5. The vehicle drive device (100) according to claim 4, wherein the sixth oil passage (PS6) includes a second inner oil passage (74b) that supplies the oil to the second rotating electrical machine (MG2) from an inner side in a radial direction (R).

6. The vehicle drive device (100) according to any one of claims 1 to 5, wherein
the first transmission system (T1) includes a distribution differential gear mechanism (PG1) that distributes a driving force of the internal combustion engine (EG) transmitted to the input member (1) to the first rotating electrical machine (MG1) and the second transmission system (T2), and
the second oil passage (PS2) includes a first supply passage (71a) that supplies the oil to the distribution differential gear mechanism (PG1).

7. The vehicle drive device (100) according to claim 3, wherein
the first transmission system (T1) includes a distribution differential gear mechanism (PG1) that distributes a driving force of the internal combustion engine (EG) transmitted to the input member (1) to the first rotating electrical machine (MG1) and the second transmission system (T2),
the second oil passage (PS2) includes a first supply passage (71a) that supplies the oil to the distribution differential gear mechanism (PG1), and
the vehicle drive device further includes a valve mechanism (8) that selectively supplies either the oil discharged from the first hydraulic pump (61) or the oil discharged from the second hydraulic pump (62) to the first inner oil passage (74a) and the first supply passage (71a).

8. The vehicle drive device (100) according to claim 7, further comprising a sixth oil passage (PS6) that supplies the oil discharged from the first hydraulic pump (61) to the second rotating electrical machine (MG2).

9. The vehicle drive device (100) according to claim 8, wherein the sixth oil passage (PS6) includes a second inner oil passage (74b) that supplies the oil to the second rotating electrical machine (MG2) from the inner side in the radial direction (R).

10. The vehicle drive device (100) according to any one of claims 7 to 9, wherein
the distribution differential gear mechanism (PG1) includes a first rotation element (C1) drivingly coupled to the input member (1), a second rotation element (S1) drivingly coupled to the first rotating electrical machine (MG1), and a third rotation element (R1),
the second transmission system (T2) includes: a first gear (2) coupled to the third rotation element (R1) so as to rotate integrally with the third rotation element (R1); a speed reducer (PG2) that reduces a speed of rotation of the second rotating electrical machine (MG2) to transmit the resultant rotation to the first gear (2); a counter gear mechanism (3) having a second gear (31) meshing with the first gear (2), and a third gear (32) that rotates integrally with the second gear (31); and an output differential gear mechanism (4) that has a fourth gear (41) meshing with the third gear (32) and that distributes rotation of the fourth gear (41) to a pair of output units (51), the output units (51) being the output member (5),
the first oil passage (PS1) includes a second supply passage (71b) that supplies the oil to the speed reducer (PG2),
the first rotating electrical machine (MG1), the second rotating electrical machine (MG2), the distribution differential gear mechanism (PG1), and the speed reducer (PG2) are coaxially arranged,
the first inner oil passage (74a), the first supply passage (71a), the second supply passage (71b), and an axis oil passage (75) are disposed inward of the first rotating electrical machine (MG1), the second rotating electrical machine (MG2), the distribution differential gear mechanism (PG1), and the speed reducer (PG2) in the radial direction (R), the axis oil passage (75) communicating with the first inner oil passage (74a), the first supply passage (71a), and the second supply passage (71b), and
the valve mechanism (8) selectively supplies either the oil discharged from the first hydraulic pump (61) or the oil discharged from the second hydraulic pump (62) to the axis oil passage (75).

11. The vehicle drive device (100) according to claim 9, wherein
the distribution differential gear mechanism (PG1) includes a first rotation element (C1) drivingly coupled to the input member (1), a second rotation element (S1) drivingly coupled to the first rotating electrical machine (MG1), and a third rotation element (R1),
the second transmission system (T2) includes: a first gear (2) coupled to the third rotation element (R1) so as to rotate integrally with the third rotation element (R1); a counter gear mechanism (3) having a second gear (31) meshing with the first gear (2), and a third gear (32) that rotates integrally with the second gear (31); an output differential gear mechanism (4) that has a fourth gear (41) meshing with the third gear (32) and that distributes rotation of the fourth gear (41) to a pair of output units (51), the output units (51) being the output member (5); and a fifth gear (RG2) that rotates integrally with a rotor (Ro2) of the second rotating electrical machine (MG2) and that meshes with the first gear (2),
the first transmission system (T1) includes a sixth gear (9) that rotates integrally with the second rotation element (S1), and a seventh gear (RG1) that rotates integrally with a rotor (Ro1) of the first rotating electrical machine (MG1) and that meshes with the sixth gear (9),
the first rotating electrical machine (MG1), the second rotating electrical machine (MG2), the distribution differential gear mechanism (PG1), the counter gear mechanism (3), and the output differential gear mechanism (4) are disposed on different axes from each other,
the first inner oil passage (74a) and a first axis oil passage (75A) communicating with the first inner oil passage (74a) are disposed inward of the first rotating electrical machine (MG1) in the radial direction (R),
the second inner oil passage (74b) and a second axis oil passage (75B) communicating with the second inner oil passage (74b) are disposed inward of the second rotating electrical machine (MG2) in the radial direction (R),
the first supply passage (71a) and a third axis oil passage (75C) communicating with the first supply passage (71a) are disposed inward of the distribution differential gear mechanism (PG1) in the radial direction (R), and
the valve mechanism (8) selectively supplies either the oil discharged from the first hydraulic pump (61) or the oil discharged from the second hydraulic pump (62) to the first axis oil passage (75A) and the third axis oil passage (75C).

## Patentansprüche

1. Fahrzeugantriebsvorrichtung (100), mit:
einem Eingangsbauteil (1), das antreibend an eine Brennkraftmaschine (EG) gekoppelt wird; einem Ausgangsbauteil (5), das antreibend an Räder (W) gekoppelt wird;
einer ersten Rotationselektromaschine (MG1) und einer zweiten Rotationselektromaschine (MG2);
einem ersten Getriebesystem (T1), das die erste Rotationselektromaschine (MG1) und das Eingangsbauteil (1) antreibend koppelt;
einem zweiten Getriebesystem (T2), das die zweite Rotationselektromaschine (MG2) und das Ausgangsbauteil (5) antreibend koppelt;
einer ersten Hydraulikpumpe (61), die durch eine Antriebskraft, die durch das zweite Getriebesystem (T2) übertragen wird, angetrieben wird, so dass, selbst während die Brennkraftmaschine (EG) gestoppt ist, Öl dem zweiten Getriebesystem (T2) durch die erste Hydraulikpumpe (61) zugeführt wird, wenn das Fahrzeug durch die Antriebskraft der zweiten Rotationselektromaschine (MG2) fährt,
einer zweiten Hydraulikpumpe (62), die durch eine dedizierte Antriebskraftquelle (62a) angetrieben wird, welche dedizierte Antriebskraftquelle (62a) von dem ersten Getriebesystem (T1) und dem zweiten Getriebesystem (T2) unabhängig ist;
einem ersten Öldurchlass (PS1), der Öl, das von der ersten Hydraulikpumpe (61) abgegeben wird, dem zweiten Getriebesystem (T2) zuführt;
einem zweiten Öldurchlass (PS2), der Öl, das von der zweiten Hydraulikpumpe (62) abgegeben wird, dem ersten Getriebesystem (T1) zuführt;
einem dritten Öldurchlass (PS3), der das Öl, das von der zweiten Hydraulikpumpe (62) abgegeben wird, der ersten Rotationselektromaschine (MG1) zuführt;
einem vierten Öldurchlass (PS4), der das Öl, das von der zweiten Hydraulikpumpe (62) abgegeben wird, der zweiten Rotationselektromaschine (MG2) zuführt; **dadurch gekennzeichnet, dass** ein fünfter Öldurchlass (PS5) das Öl, das von der ersten Hydraulikpumpe (61) abgegeben wird, der ersten Rotationselektromaschine (MG1) zuführt.

2. Fahrzeugantriebsvorrichtung (100) nach Anspruch 1, bei der
der dritte Öldurchlass (PS3) einen ersten äußeren Öldurchlass (73a), der das Öl der ersten Rotationselektromaschine (MG1) von einer äußeren Seite in einer radialen Richtung (R) zuführt, aufweist, und
der vierte Öldurchlass (PS4) einen zweiten äußeren Öldurchlass (73b), der das Öl der zweiten Rotationselektromaschine (MG2) von der äußeren Seite in der radialen Richtung (R) zuführt, aufweist.

3. Fahrzeugantriebsvorrichtung (100) nach Anspruch 1 oder 2, bei der der fünfte Öldurchlass (PS5) einen ersten inneren Öldurchlass (74a), der das Öl der ersten Rotationselektromaschine (MG1) von einer inneren Seite in der radialen Richtung (R) zuführt, aufweist.

4. Fahrzeugantriebsvorrichtung (100) nach einem der Ansprüche 1 bis 3, ferner mit einem sechsten Öldurchlass (PS6), der das Öl, das von der ersten Hydraulikpumpe (61) abgegeben wird, der zweiten Rotationselektromaschine (MG2) zuführt.

5. Fahrzeugantriebsvorrichtung (100) nach Anspruch 4, bei der der sechste Öldurchlass (PS6) einen zweiten inneren Öldurchlass (74b), der das Öl der zweiten Rotationselektromaschine (MG2) von einer inneren Seite in einer radialen Richtung (R) zuführt, aufweist.

6. Fahrzeugantriebsvorrichtung (100) nach einem der Ansprüche 1 bis 5, bei der das erste Getriebesystem (T1) einen Verteilungsdifferenzialgetriebemechanismus (PG1), der eine Antriebskraft der Brennkraftmaschine (EG), die an das Eingangsbauteil (1) übertragen wird, an die erste Rotationselektromaschine (MG1) und das zweite Getriebesystem (T2) verteilt, aufweist, und
der zweite Öldurchlass (PS2) einen ersten Zufuhrdurchlass (71a), der das Öl dem Verteilungsdifferenzialgetriebemechanismus (PG1) zuführt, aufweist.

7. Fahrzeugantriebsvorrichtung (100) nach Anspruch 3, bei der
das erste Getriebesystem (T1) einen Verteilungsdifferenzialgetriebemechanismus (PG1), der eine Antriebskraft der Brennkraftmaschine (EG), die an das Eingangsbauteil (1) übertragen wird, an die erste Rotationselektromaschine (MG1) und das zweite Getriebesystem (T2) verteilt, aufweist,
der zweite Öldurchlass (PS2) einen ersten Zufuhrdurchlass (71a), der das Öl dem Verteilungsdifferenzialgetriebemechanismus (PG1) zuführt, aufweist, und
die Fahrzeugantriebsvorrichtung ferner einen Ventilmechanismus (8), der selektiv entweder das Öl, das von der ersten Hydraulikpumpe (61) abgegeben wird, oder das Öl, das von der zweiten Hydraulikpumpe (62) abgegeben wird, dem ersten inneren Öldurchlass (74a) und dem ersten Zufuhrdurchlass (71a) zuführt, aufweist.

8. Fahrzeugantriebsvorrichtung (100) nach Anspruch 7, ferner mit einem sechsten Öldurchlass (PS6), der das Öl, das von der ersten Hydraulikpumpe (61) abgegeben wird, der zweiten Rotationselektromaschine (MG2) zuführt.

9. Fahrzeugantriebsvorrichtung (100) nach Anspruch 8, bei der der sechste Öldurchlass (PS6) einen zweiten inneren Öldurchlass (74b), der das Öl der zweiten Rotationselektromaschine (MG2) von der inneren Seite in der radialen Richtung (R) zuführt, aufweist.

10. Fahrzeugantriebsvorrichtung (100) nach einem der Ansprüche 7 bis 9, bei der der Verteilungsdifferenzialgetriebemechanismus (PG1) ein erstes Rotationselement (C1), das antreibend an das Eingangsbauteil (1) gekoppelt ist, ein zweites Rotationselement (S1), das antreibend an die erste Rotationselektromaschine (MG1) gekoppelt ist, und ein drittes Rotationselement (R1) aufweist,
das zweite Getriebesystem (T2) aufweist: ein erstes Zahnrad (2), das an das dritte Rotationselement (R1) so gekoppelt ist, dass es integral mit dem dritten Rotationselement (R1) rotiert; eine Drehzahlreduzierungsvorrichtung (PG2), die eine Drehzahl der zweiten Rotationselektromaschine (MG2) zum Übertragen der sich ergebenden Rotation an das erste Zahnrad (2) reduziert; einen Vorgelegemechanismus (3), der ein zweites Zahnrad (31), das mit dem ersten Zahnrad (2) kämmt, und ein drittes Zahnrad (32), das integral mit dem zweiten Zahnrad (31) rotiert, aufweist; und einen Ausgangsdifferenzialgetriebemechanismus (4), der ein viertes Zahnrad (41), das mit dem dritten Zahnrad (32) kämmt, aufweist und der eine Rotation des vierten Zahnrads (41) an ein Paar Ausgangseinheiten (51), die das Ausgangsbauteil (5) sind, überträgt,
der erste Öldurchlass (PS1) einen zweiten Zufuhrdurchlass (71b), der das Öl der Drehzahlreduzierungsvorrichtung (PG2) zuführt, aufweist,
die erste Rotationselektromaschine (MG1), die zweite Rotationselektromaschine (MG2), der Verteilungsdifferenzialgetriebemechanismus (PG1) und die Drehzahlreduzierungsvorrichtung (PG2) koaxial angeordnet sind,
der erste innere Öldurchlass (74a), der erste Zufuhrdurchlass (71a), der zweite Zufuhrdurchlass (71b) und ein Achsenöldurchlass (75) einwärts der ersten Rotationselektromaschine (MG1), der zweiten Rotationselektromaschine (MG2), des Verteilungsdifferenzialgetriebemechanismus (PG1) und der Drehzahlreduzierungsvorrichtung (PG2) in der radialen Richtung (R) angeordnet sind, welcher Achsenöldurchlass (75) mit dem ersten inneren Öldurchlass (74a), dem ersten Zufuhrdurchlass (71a) und dem zweiten Zufuhrdurchlass (71b) in Verbindung steht, und
der Ventilmechanismus (8) selektiv entweder das Öl, das von der ersten Hydraulikpumpe (61) abgegeben wird, oder das Öl, das von der zweiten Hydraulikpumpe (62) abgegeben wird, dem Achsenöldurchlass (75) zuführt.

11. Fahrzeugantriebsvorrichtung (100) nach Anspruch 9, bei der
der Verteilungsdifferenzialgetriebemechanismus (PG1) ein erstes Rotationselement (C1), das antreibend an das Eingangsbauteil (1) gekoppelt ist, ein zweites Rotationselement (S1), das antreibend an die erste Rotationselektromaschine (MG1) gekoppelt ist, und ein drittes Rotationselement (R1) aufweist,
das zweite Getriebesystem (T2) aufweist: ein erstes Zahnrad (2), das an das dritte Rotationselement (R1) so gekoppelt ist, dass es integral mit dem dritten Rotationselement (R1) rotiert; einen Vorgelegemechanismus (3), der ein zweites Zahnrad (31), das mit dem ersten Zahnrad (2) kämmt, und ein drittes Zahnrad (32), das integral mit dem zweiten Zahnrad (31) rotiert, aufweist; einen Ausgangsdifferenzialgetriebemechanismus (4), der ein viertes Zahnrad (41), das mit dem dritten Zahnrad (32) kämmt, aufweist und der eine Rotation des vierten Zahnrads (41) an ein Paar Ausgangseinheiten (51), die das Ausgangsbauteil (5) sind, verteilt; und ein fünftes Zahnrad (RG2), das integral mit einem Rotor (Ro2) der zweiten Rotationselektromaschine (MG2) rotiert und das mit dem ersten Zahnrad (2) kämmt,
das erste Getriebesystem (T1) ein sechstes Zahnrad (9), das integral mit dem zweiten Rotationselement (S1) rotiert, und ein siebtes Zahnrad (RG1), das integral mit einem Rotor (Ro1) der ersten Rotationselektromaschine (MG1) rotiert und das mit dem sechsten Zahnrad (9) kämmt, aufweist,
die erste Rotationselektromaschine (MG1), die zweite Rotationselektromaschine (MG2), der Verteilungsdifferenzialgetriebemechanismus (PG1), der Vorgelegemechanismus (3) und der Ausgangsdifferenzialgetriebemechanismus (4) auf voneinander verschiedenen Achsen angeordnet sind,
der erste innere Öldurchlass (74a) und ein erster Achsenöldurchlass (75A), der mit dem ersten inneren Öldurchlass (74a) in Verbindung steht, einwärts der ersten Rotationselektromaschine (MG1) in der radialen Richtung (R) angeordnet sind,
der zweite innere Öldurchlass (74b) und ein zweiter Achsenöldurchlass (75B), der mit dem zweiten inneren Öldurchlass (74b) in Verbindung steht, einwärts der zweiten Rotationselektromaschine (MG2) in der radialen Richtung (R) angeordnet sind,
der erste Zufuhrdurchlass (71a) und ein dritter Achsenöldurchlass (75C), der mit dem ersten Zufuhrdurchlass (71a) in Verbindung steht, einwärts des Verteilungsdifferenzialgetriebemechanismus (PG1) in der radialen Richtung (R) angeordnet sind, und
der Ventilmechanismus (8) selektiv entweder das Öl, das von der ersten Hydraulikpumpe (61) abgegeben wird, oder das Öl, das von der zweiten Hydraulikpumpe (62) abgegeben wird, dem ersten Achsenöldurchlass (75A) und dem dritten Achsenöldurchlass (75C) zuführt.

## Revendications

1. Dispositif d'entraînement de véhicule (100) comprenant :
un élément d'entrée (1) couplé à un moteur à combustion interne (EG) ;
un élément de sortie (5) couplé à des roues (W) ;
une première machine électrique tournante (MG1) et une seconde machine électrique tournante (MG2) ;
un premier système de transmission (T1) qui couple de manière motrice la première machine électrique tournante (MG1) et l'élément d'entrée (1) ;
un second système de transmission (T2) qui couple de manière motrice la seconde machine électrique tournante (MG2) et l'élément de sortie (5) ;
une première pompe hydraulique (61) entraînée par une force motrice transmise par le second système de transmission (T2) de sorte que, même lorsque le moteur à combustion interne (EG) est arrêté, l'huile est fournie au second système de transmission (T2) par la première pompe hydraulique (61) lorsque le véhicule se déplace sous l'effet de la force motrice de la seconde machine électrique tournante (MG2),
une seconde pompe hydraulique (62) entraînée par une source de force motrice dédiée (62a), la source de force motrice dédiée (62a) étant indépendante du premier système de transmission (T1) et du second système de transmission (T2) ;
un premier passage d'huile (PS1) qui fournit l'huile évacuée de la première pompe hydraulique (61) au second système de transmission (T2) ;
un second passage d'huile (PS2) qui fournit l'huile évacuée de la seconde pompe hydraulique (62) au premier système de transmission (T1) ;
un troisième passage d'huile (PS3) qui fournit l'huile évacuée de la seconde pompe hydraulique (62) à la première machine électrique tournante (MG1) ;
un quatrième passage d'huile (PS4) qui fournit l'huile évacuée de la seconde pompe hydraulique (62) à la seconde machine électrique tournante (MG2) ; **caractérisé en ce qu'**un cinquième passage d'huile (PS5) fournit l'huile évacuée de la première pompe hydraulique (61) à la première machine électrique tournante (MG1).

2. Dispositif d'entraînement de véhicule (100) selon la revendication 1, dans lequel
le troisième passage d'huile (PS3) comprend un premier passage d'huile extérieur (73a) qui alimente en huile la première machine électrique tournante (MG1) à partir d'un côté extérieur dans une direction radiale (R), et
le quatrième passage d'huile (PS4) comprend un second passage d'huile extérieur (73b) qui alimente en huile la seconde machine électrique tournante (MG2) à partir d'un côté extérieur dans la direction radiale (R).

3. Dispositif d'entraînement de véhicule (100) selon la revendication 1 ou 2, dans lequel le cinquième passage d'huile (PS5) comprend un premier passage d'huile intérieur (74a) qui fournit l'huile à la première machine électrique tournante (MG1) à partir d'un côté intérieur dans la direction radiale (R).

4. Dispositif d'entraînement de véhicule (100) selon l'une quelconque des revendications 1 à 3, comprenant en outre un sixième passage d'huile (PS6) qui fournit l'huile évacuée de la première pompe hydraulique (61) à la seconde machine électrique tournante (MG2).

5. Dispositif d'entraînement de véhicule (100) selon la revendication 4, dans lequel le sixième passage d'huile (PS6) comprend un second passage d'huile intérieur (74b) qui fournit l'huile à la seconde machine électrique tournante (MG2) à partir d'un côté intérieur dans une direction radiale (R).

6. Dispositif d'entraînement de véhicule (100) selon l'une quelconque des revendications 1 à 5, dans lequel
le premier système de transmission (T1) comprend un mécanisme d'engrenage différentiel de distribution (PG1) qui distribue une force motrice du moteur à combustion interne (EG) transmise à l'élément d'entrée (1) à la première machine électrique tournante (MG1) et au second système de transmission (T2), et
le second passage d'huile (PS2) comprend un premier passage d'alimentation (71a) qui fournit l'huile au mécanisme d'engrenage différentiel de distribution (PG1).

7. Dispositif d'entraînement de véhicule (100) selon la revendication 3, dans lequel
le premier système de transmission (T1) comprend un mécanisme d'engrenage différentiel de distribution (PG1) qui distribue une force motrice du moteur à combustion interne (EG) transmise à l'élément d'entrée (1) à la première machine électrique tournante (MG1) et au second système de transmission (T2),
le second passage d'huile (PS2) comprend un premier passage d'alimentation (71a) qui fournit l'huile au mécanisme d'engrenage différentiel de distribution (PG1), et
le dispositif d'entraînement de véhicule comprend en outre un mécanisme de soupape (8) qui fournit sélectivement soit l'huile évacuée de la première pompe hydraulique (61), soit l'huile évacuée de la seconde pompe hydraulique (62) au premier passage d'huile intérieur (74a) et au premier passage d'alimentation (71a).

8. Dispositif d'entraînement de véhicule (100) selon la revendication 7, comprenant en outre un sixième passage d'huile (PS6) qui fournit l'huile évacuée de la première pompe hydraulique (61) à la seconde machine électrique tournante (MG2).

9. Dispositif d'entraînement de véhicule (100) selon la revendication 8, dans lequel le sixième passage d'huile (PS6) comprend un second passage d'huile intérieur (74b) qui fournit l'huile à la seconde machine électrique tournante (MG2) depuis le côté intérieur dans la direction radiale (R).

10. Dispositif d'entraînement de véhicule (100) selon l'une quelconque des revendications 7 à 9, dans lequel
le mécanisme d'engrenage différentiel de distribution (PG1) comprend un premier élément de rotation (C1) couplé par entraînement à l'élément d'entrée (1), un second élément de rotation (S1) couplé par entraînement à la première machine électrique tournante (MG1), et un troisième élément de rotation (R1),
le second système de transmission (T2) comprend un premier engrenage (2) couplé au troisième élément de rotation (R1) de manière à tourner intégralement avec le troisième élément de rotation (R1) ; un réducteur de vitesse (PG2) qui réduit une vitesse de rotation de la seconde machine électrique tournante (MG2) pour transmettre la rotation résultante au premier engrenage (2) ; un mécanisme de contre-engrenage (3) ayant un second engrenage (31) en prise avec le premier engrenage (2) et un troisième engrenage (32) qui tourne intégralement avec le second engrenage (31) ; et un mécanisme d'engrenage différentiel de sortie (4) qui a un quatrième engrenage (41) en prise avec le troisième engrenage (32) et qui distribue la rotation du quatrième engrenage (41) à une paire d'unités de sortie (51), les unités de sortie (51) étant l'élément de sortie (5),
le premier passage d'huile (PS1) comprend un second passage d'alimentation (71b) qui fournit l'huile au réducteur de vitesse (PG2),
la première machine électrique tournante (MG1), la seconde machine électrique tournante (MG2), le mécanisme d'engrenage différentiel de distribution (PG1) et le réducteur de vitesse (PG2) sont disposés coaxialement,
le premier passage d'huile intérieur (74a), le premier passage d'alimentation (71a), le second passage d'alimentation (71b) et un passage d'huile d'axe (75) sont disposés à l'intérieur de la première machine électrique tournante (MG1), de la seconde machine électrique tournante (MG2), du mécanisme d'engrenage différentiel de distribution (PG1) et du réducteur de vitesse (PG2) dans la direction radiale (R), le passage d'huile d'axe (75) communiquant avec le premier passage d'huile intérieur (74a), le premier passage d'alimentation (71a) et le second passage d'alimentation (71b), et
le mécanisme de soupape (8) fournit sélectivement le passage d'huile d'axe (75) soit avec l'huile évacuée de la première pompe hydraulique (61), soit avec l'huile évacuée de la seconde pompe hydraulique (62).

11. Dispositif d'entraînement de véhicule (100) selon la revendication 9, dans lequel
le mécanisme d'engrenage différentiel de distribution (PG1) comprend un premier élément de rotation (C1) couplé par entraînement à l'élément d'entrée (1), un second élément de rotation (S1) couplé par entraînement à la première machine électrique tournante (MG1), et un troisième élément de rotation (R1),
le second système de transmission (T2) comprend : un premier engrenage (2) couplé au troisième élément de rotation (R1) de manière à tourner intégralement avec le troisième élément de rotation (R1) ; un mécanisme de contre-engrenage (3) ayant un second engrenage (31) en prise avec le premier engrenage (2), et un troisième engrenage (32) qui tourne intégralement avec le second engrenage (31) ; un mécanisme d'engrenage différentiel de sortie (4) qui a un quatrième engrenage (41) en prise avec le troisième engrenage (32) et qui distribue la rotation du quatrième engrenage (41) à une paire d'unités de sortie (51), les unités de sortie (51) étant l'élément de sortie (5) ; et un cinquième engrenage (RG2) qui tourne intégralement avec un rotor (Ro2) de la seconde machine électrique tournante (MG2) et qui s'engrène avec le premier engrenage (2),
le premier système de transmission (T1) comprend un sixième engrenage (9) qui tourne intégralement avec le second élément de rotation (S1), et un septième engrenage (RG1) qui tourne intégralement avec un rotor (Ro1) de la première machine électrique tournante (MG1) et qui s'engrène avec le sixième engrenage (9),
la première machine électrique tournante (MG1), la seconde machine électrique tournante (MG2), le mécanisme d'engrenage différentiel de distribution (PG1), le mécanisme d'engrenage inverse (3) et le mécanisme d'engrenage différentiel de sortie (4) sont disposés sur des axes différents les uns des autres,
le premier passage d'huile intérieur (74a) et un passage d'huile du premier axe (75A) communiquant avec le premier passage d'huile intérieur (74a) sont disposés vers l'intérieur de la première machine électrique tournante (MG1) dans la direction radiale (R),
le second passage d'huile interne (74b) et un second passage d'huile d'axe (75B) communiquant avec le second passage d'huile interne (74b) sont disposés à l'intérieur de la seconde machine électrique tournante (MG2) dans la direction radiale (R),
le premier passage d'alimentation (71a) et un passage d'huile du troisième axe (75C) communiquant avec le premier passage d'alimentation (71a) sont disposés vers l'intérieur du mécanisme d'engrenage différentiel de distribution (PG1) dans la direction radiale (R), et
le mécanisme de soupape (8) fournit sélectivement le passage d'huile de premier axe (75A) et le passage d'huile de troisième axe (75C) avec l'huile évacuée de la première pompe hydraulique (61) ou l'huile évacuée de la seconde pompe hydraulique (62).
